# EUROPEAN PATENT APPLICATION

(11) **EP 4 769 625 A1**
(43) Date of publication of application: **01.07.2026**
(21) Application number: 24937712.8
(22) Date of filing: 26.11.2024
(51) Int. Cl.: H01M 10/0568, H01M 10/0525, H01M 50/124, H01M 50/131, H01M 50/107

(54) **CYLINDRICAL BATTERY CELL, BATTERY AND ELECTRIC DEVICE**

(30) Priority: 30.04.2024 CN 202410543473
(71) Applicant: Contemporary Amperex Technology Co., Limited, Ningde, Fujian 352100 (CN)
(72) Inventor: XU, Ningbo, Ningde, Fujian 352100 (CN); CHEN, Peipei, Ningde, Fujian 352100 (CN)
(74) Representative: Gong, Jinping
(86) International application number: PCT/CN2024/134434
(87) International publication number: WO 2025/227683

(57) **Abstract**

A cylindrical battery cell, a battery and an electric device. The cylindrical battery cell includes an electrolyte solution, an electrode assembly and a casing, where the casing accommodates the electrolyte solution and the electrode assembly. The electrolyte solution contains an electrolyte salt, and the electrolyte salt includes a hexafluorophosphate. The casing includes a casing body and a film layer, the film layer is at least arranged on a surface of the casing body facing the electrode assembly, and the matrix element in the film layer is the nickel element. The reliability and cycle performance of the cylindrical battery cell during use in the embodiments are improved.

## Description

### CROSS-REFERENCE TO RELATED APPLICATIONS

The present application claims priority to Chinese Patent Application No. 202410543473.X filed on April 30, 2024 and entitled "CYLINDRICAL BATTERY CELL, BATTERY, AND ELECTRIC DEVICE", which is incorporated herein by reference in its entirety.

### TECHNICAL FIELD

The present application relates to the field of chargeable and dischargeable batteries, and in particular, to a cylindrical battery cell, a battery, and an electric device.

### BACKGROUND

Battery cells have properties such as high capacity and are therefore widely used in electronic devices such as a mobile phone, a notebook computer, an electromobile, an electric vehicle, an electric airplane, an electric ship, an electric toy car, an electric toy ship, an electric toy airplane, and an electric tool.

With the advancement in the field of battery cells, requirements on battery performance gradually increase, and the reliability and cycle performance of the battery cells during use need to be further improved.

### SUMMARY

The present application provides a cylindrical battery cell, a battery, and an electric device. The reliability and cycle performance during use of the cylindrical battery cell according to the embodiment of the present application can be improved.

In a first aspect, an embodiment of the present application provides a cylindrical battery cell. The cylindrical battery cell includes an electrolyte solution, an electrode assembly, and a casing. The casing accommodates the electrolyte solution and the electrode assembly. The electrolyte solution contains an electrolyte salt including a hexafluorophosphate. The casing includes a casing body and a film layer. The film layer is disposed on at least a surface of the casing body that faces the electrode assembly, and a matrix element in the film layer is the Ni element.

Therefore, the matrix element in the film layer in the embodiment of the present application is the Ni element, with which the acid corrosion resistance of the film layer is significantly improved. When the cylindrical battery cell further contains the hexafluorophosphate, the Ni element can also effectively improve the acid corrosion resistance of the film layer, and reduce the risk of generation of metal ions due to metal corrosion in the casing. In addition, the casing of the cylindrical battery cell can effectively disperse an action force in the system, so that the casing is uniformly stressed and is unlikely to be deformed, whereby the reliability and cycle performance of the cylindrical battery cell during use are improved. In the embodiment of the present application, the matrix element refers to an element having the largest proportion in the film layer.

In some embodiments, the molar concentration of the hexafluorophosphate is less than or equal to 1.2 mol/L. With a molar concentration of the hexafluorophosphate in the above range, the corrosion of the casing is further reduced, and the reliability and cycle performance of the cylindrical battery cell during use are further improved.

In some embodiments, the molar concentration of the hexafluorophosphate is less than or equal to 0.9 mol/L. With a molar concentration of the hexafluorophosphate in the above range, the corrosion of the casing is further reduced, and the reliability and cycle performance of the cylindrical battery cell during use are further improved.

In some embodiments, the molar concentration of the hexafluorophosphate is 0.2 mol/L to 0.8 mol/L. With a molar concentration of the hexafluorophosphate in the above range, the reliability and cycle performance of the cylindrical battery cell during use are further improved.

In some embodiments, the molar concentration of the hexafluorophosphate is 0.3 mol/L to 0.7 mol/L. With a molar concentration of the hexafluorophosphate in the above range, the reliability and cycle performance of the cylindrical battery cell during use are further improved.

In some embodiments, the thickness of the film layer is 1.5 µm to 6.0 µm. With the thickness of the film layer in the above range, the corrosion resistance of the film layer is improved, and thus the reliability and cycle performance of the cylindrical battery cell during use are improved.

In some embodiments, the thickness of the film layer is 2.0 µm to 4.0 µm. With the thickness of the film layer in the above range, the corrosion resistance of the film layer is improved, and thus the reliability and cycle performance of the cylindrical battery cell during use are improved.

In some embodiments, the content in percentage by weight of the Ni element in the film layer is 70 wt% to 100 wt%. With a content in percentage by weight of the Ni element in the above range, the corrosion resistance of the film layer is improved, and thus the reliability and cycle performance of the cylindrical battery cell during use are improved.

In some embodiments, the content in percentage by weight of the Ni element in the film layer is 80 wt% to 95 wt%. With a content in percentage by weight of the Ni element in the above range, the corrosion resistance of the film layer is improved, and thus the reliability and cycle performance of the cylindrical battery cell during use are improved.

In some embodiments, the film layer further contains the iron element. The content in percentage by weight of the iron element in the film layer is 0.1 wt% to 10 wt%, and optionally 1 wt% to 5 wt%. With the content in percentage by weight of the iron element in the above range, the electrical conductivity of the casing is effectively improved, thereby facilitating the electronic transmission.

In some embodiments, the film layer further contains the carbon element. The content in percentage by weight of the carbon element in the film layer is 0.1 wt% to 15 wt% and optionally 4 wt% to 12 wt%. With a content in percentage by weight of the carbon element in the above range, the electrical conductivity of the casing is effectively improved, thereby facilitating the electronic transmission.

In some embodiments, the ratio of the molar concentration of a sulfonimide salt to the molar concentration of the hexafluorophosphate is from 0.06 to 6. With the ratio of the molar concentration of the sulfonimide salt to the molar concentration of the hexafluorophosphate in the above range, the electrolyte salt has excellent thermal stability and is not prone to thermal decomposition to cause acid corrosion; and the electrolyte salt has excellent chemical stability, whereby the stability of the electrolyte salt is further improved, and the reliability and cycle performance of the cylindrical battery cell during use are further improved.

In some embodiments, the ratio of the molar concentration of the sulfonimide salt to the molar concentration of the hexafluorophosphate is from 0.2 to 2. With the ratio of the molar concentration of the sulfonimide salt to the molar concentration of the hexafluorophosphate in the above range, the stability of the electrolyte salt is further improved and the reliability and cycle performance of the battery cell are further improved.

In some embodiments, the ratio of the molar concentration of the sulfonimide salt to the molar concentration of the hexafluorophosphate is from 0.3 to 1.5. With the ratio of the molar concentration of the sulfonimide salt to the molar concentration of the hexafluorophosphate in the above range, the stability of the electrolyte salt is further improved and the reliability and cycle performance of the battery cell are further improved.

In some embodiments, the molar concentration of the electrolyte salt is 0.5 mol/L to 2 mol/L. With a molar concentration of the electrolyte salt in the above range, the stability of the electrolyte salt is further improved, and the reliability and cycle performance of the cylindrical battery cell during use are further improved; and the transmission of the active ions through the liquid phase is facilitated, thereby improving the kinetic performance of the cylindrical battery cell.

In some embodiments, the molar concentration of the electrolyte salt is 0.6 mol/L to 1.5 mol/L. With a molar concentration of the electrolyte salt in the above range, the kinetic performance of the cylindrical battery cell is further improved.

In some embodiments, the sulfonimide salt contains an anion of Formula A: 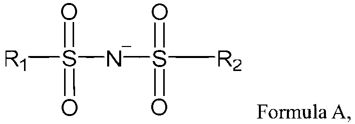 where in Formula A, R₁ and R₂ each independently include a halogen atom or a C1 to C6 haloalkyl group.

Therefore, the thermal stability of the sulfonimide salt of the above material in the embodiment of the present application is excellent, which reduces the corrosion of the casing by the electrolyte salt and improves the reliability and cycle performance of the cylindrical battery cell.

In some embodiments, the halogen atom includes fluorine atom.

In some embodiments, the C1 to C6 haloalkyl group includes a C1 to C6 fluoroalkyl group.

In some embodiments, R₁ and R₂ each independently include a fluorine atom or a C1 to C3 fluoroalkyl group.

In some embodiments, the anion of Formula A includes one or more of anions of Formula A-1 to Formula A-5:

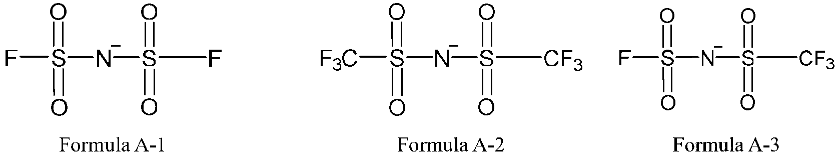

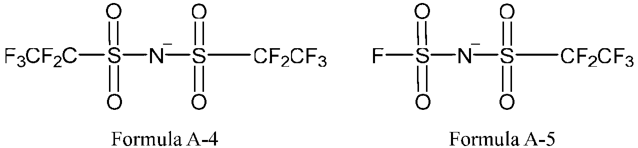

In some embodiments, the anion of Formula A includes one or more of the anions of Formula A-1 to Formula A-2:

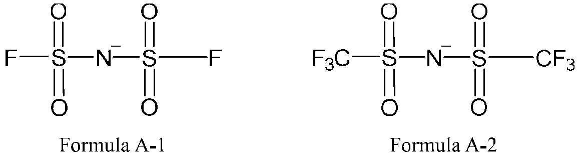

In some embodiments, the base material of the casing body is steel. The casing body of the above material has excellent mechanical strength, and is not prone to deformation, thereby further improving the reliability of the cylindrical battery cell during use.

In some embodiments, the electrode assembly includes a negative electrode plate. The negative electrode plate includes a negative electrode current collector and a negative electrode film layer arranged on at least one side of the negative electrode current collector and containing a negative electrode active material. The negative electrode active material contains the silicon element. With a content in percentage by weight of the silicon element in the above range, the energy density of the cylindrical battery cell is improved. In addition, the casing of the cylindrical structure can constrain the expanded electrode assembly, so that an action force applied on the casing by the electrode assembly is relatively evenly dispersed, and the casing is not prone to deformation, thereby improving the structural stability of the casing, and improving the reliability of the cylindrical battery cell during use.

In some embodiments, the content in percentage by weight of the silicon element in the negative electrode film layer is 1% to 32%. With a content in percentage by weight of the silicon element in the above range, the energy density of the cylindrical battery cell is improved, and the reliability of the cylindrical battery cell during use is improved.

In some embodiments, the electrolyte solution contains a chain ester solvent. The content in percentage by weight of the chain ester solvent in the electrolyte solution is greater than or equal to 25.5 wt%.

Therefore, in the embodiment of the present application, the content in percentage by weight of the chain ester solvent is greater than or equal to 25.5 wt%, whereby the electric conductivity of the electrolyte solution is relatively high, which improves the transmission of active ions in the liquid phase and improves the fast charging and discharging capability of the battery cell, thereby improving the rate performance of the battery cell.

In some embodiments, the content in percentage by weight of the chain ester solvent in the electrolyte solution is 25.5 wt% to 76.5 wt%. With a content in percentage by weight of the chain ester solvent in the above range, the rate performance and the reliability of the battery cell during use is further improved, and the cycle performance of the battery cell is also further improved.

In some embodiments, the content in percentage by weight of the chain ester solvent in the electrolyte solution is 25.5 wt% to 70 wt%. With a content in percentage by weight of the chain ester solvent in the above range, the rate performance and the reliability of the battery cell during use is further improved, and the cycle performance of the battery cell is also further improved.

In some embodiments, the content in percentage by weight of the chain ester solvent in the electrolyte solution is 42.5 wt% to 70 wt%. With a content in percentage by weight of the chain ester solvent in the above range, the rate performance and the reliability of the battery cell during use is further improved, and the cycle performance of the battery cell is also further improved.

In some embodiments, the chain ester solvent includes a chain carbonate. The content in percentage by weight of the chain carbonate in the electrolyte solution is 4 wt% to 70 wt%. With a content in percentage by weight of the chain carbonate in the above range, the electrical connectivity of the electrolyte solution is improved, the dynamic performance of liquid-phase transmission of the electrolyte solution is improved, and the rate performance and the reliability of the battery cell during use are further improved.

In some embodiments, the content in percentage by weight of the chain carbonate in the electrolyte solution is 4 wt% to 42.5 wt%. With a content in percentage by weight of the chain carbonate in the above range, the electrical connectivity of the electrolyte solution is improved, the dynamic performance of liquid-phase transmission of the electrolyte solution is improved, and the rate performance and the reliability of the battery cell during use are further improved.

In some embodiments, the chain carbonate includes a compound of Formula I, 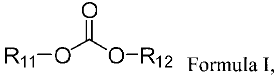 where in Formula I, R₁₁ and R₁₂ each independently include a C1 to C3 alkyl group or a C1 to C3 haloalkyl group.

Therefore, when the chain carbonate in the embodiment of the present application is the above material, the rate performance and the reliability of the battery cell during use are further improved.

In some embodiments, R₁₁ and R₁₂ each independently include a C1 to C3 alkyl group or a C1 to C3 fluoroalkyl group.

In some embodiments, the chain carbonate includes one or more of compounds of Formula I-1 to Formula I-6:

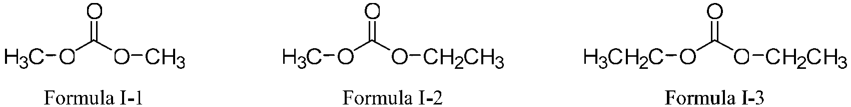

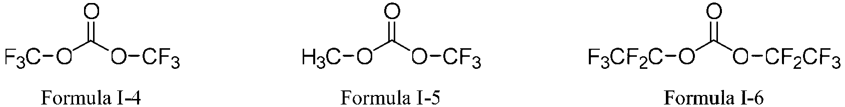

In some embodiments, the chain carbonate includes the compound of Formula 1-1,

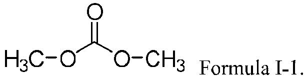

In some embodiments, the chain ester solvent further includes a chain carboxylate. The content in percentage by weight of the chain carboxylate in the electrolyte solution is 4 wt% to 70 wt%. By using the chain carboxylate and the chain carbonate in combination, the electrical conductivity of the electrolyte solution is improved, the dynamic of liquid-phase transmission of the electrolyte solution is improved, and the rate performance and the reliability of the battery cell during use are further improved.

In some embodiments, the content in percentage by weight of the chain carboxylate in the electrolyte solution is 8.5 wt% to 60 wt%. With a content in percentage by weight of the chain carboxylate in the electrolyte solution in the above range, the electrical connectivity of the electrolyte solution is improved, the dynamic of liquid-phase transmission of the electrolyte solution is improved, and the rate performance and the reliability of the battery cell during use are further improved.

In some embodiments, the chain carboxylate includes a compound of Formula II: 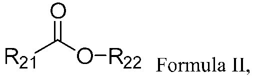 where in Formula II,
R₂₁ includes a hydrogen atom, a halogen atom, a C1 to C3 alkyl group, or a C1 to C3 haloalkyl group; and
R₂₂ includes a C1 to C3 alkyl group or a C1 to C3 haloalkyl group.

Therefore, by using the chain carboxylate and the chain carbonate of the above materials in the embodiment of the present application in combination, the rate performance and the reliability of the battery cell during use are further improved.

In some embodiments, R₂₁ includes a hydrogen atom, a fluorine atom, a C1 to C3 alkyl group, or a C1 to C3 fluoroalkyl group.

In some embodiments, R₂₂ include a C1 to C3 alkyl group or a C1 to C3 fluoroalkyl group.

In some embodiments, the chain carboxylate includes one or more of compounds of Formula 11-1 to Formula II-6:

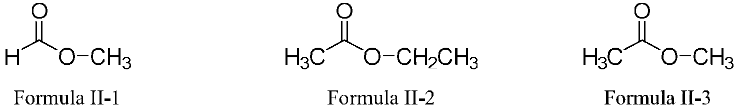

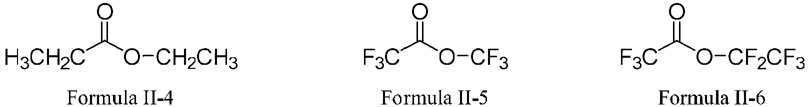

In some embodiments, the chain carboxylate includes one or more of the compounds of Formula II-2 and Formula II-3.

In some embodiments, the chain carbonate includes the compound of Formula I-1,

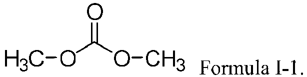

The content in percentage by weight of the compound of Formula 1-1 in the electrolyte solution is 8.5 wt% to 35 wt%.

The chain carboxylate includes the compound of Formula II-2 and the compound of Formula II-3. The content in percentage by weight of the compound of Formula II-2 and the compound of Formula 11-3 in the electrolyte solution is 20 wt% to 55 wt%.

In some embodiments, the casing includes a shell and an end cover. The shell includes a side wall and an end wall connected to the side wall. The shell has an opening, the end cover is connected to the side wall to cover the opening, and the end cover and the end ball are opposite to each other in an axial direction of the cylindrical battery cell.

In some embodiments, the base material of the side wall is steel, and the side wall has a thickness of 0.30 mm to 1.2 mm. When the thickness of the side wall falls within the above range, the side wall has a high strength and a high stress withstanding capability, and can effectively relieve the risk of deformation of the side wall and reduce the risk of bulging of the battery cell, thereby improving the reliability of the battery cell during use.

In some embodiments, the thickness of the side wall is 0.30 mm to 0.55 mm. When the thickness of the side wall falls within the above range, the risk of bulging of the battery cell can be reduced, thereby improving the reliability of the battery cell during use.

In some embodiments, the side wall and the end wall are an integrally formed structure.

In some embodiments, the end cover is arranged with a pressure relief mechanism. The pressure relief mechanism is deformed under the action of an internal pressure, so that an internal space in the casing communicates with an external space, and a gas inside the casing is vented, to reduce the risk of explosion of the battery cell.

In some embodiments, the pressure relief mechanism includes a weak portion. The base material of the weak portion includes steel, and the thickness of the weak portion is 0.01 mm to 0.3 mm. When the thickness of the weak portion falls within the above range, the weak portion has a relatively high strength and a high stress withstanding capability, so that the pressure endurance capability of the battery cell can be effectively improved, and the reliability of the battery cell during use can be improved.

In some embodiments, the thickness of the weak portion is 0.05 mm to 0.2 mm. When the thickness of the weak portion falls within the above range, the reliability of the battery cell during use can be further improved.

In some embodiments, the end cover is provided with a recess, and a bottom wall of the recess is the weak portion. This structural form is simple and convenient to process.

In some embodiments, the battery cell further includes an electrode terminal disposed on the end wall. The battery cell includes an electrode assembly accommodated in the shell. The electrode assembly includes a first tab and a second tab having opposite polarity. The first tab is electrically connected to the end wall, and the second tab is electrically connected to the electrode terminal.

In some embodiments, the size of the casing in its axial direction is 1.3 times to 2.5 times the size of the casing in a radial direction of the cylindrical battery cell.

In some embodiments, the size of the casing in the axial direction of the cylindrical battery cell is 50 mm to 150 mm.

In some embodiments, the size of the casing in the radial direction of the cylindrical battery cell is 40 mm to 80 mm.

In a second aspect, an embodiment of the present application provides a battery, which includes a cylindrical battery cell according to any one of the embodiments in the first aspect of the present application.

In a third aspect, an embodiment of the present application further provides an electric device, which includes a battery according to any embodiment in the second aspect of the present application.

### BRIEF DESCRIPTION OF THE DRAWINGS

To describe the technical solutions in the embodiments of the present application more clearly, the accompanying drawings required for describing the embodiments of the present application will be described briefly below. Apparently, the accompanying drawings described below show only some embodiments of the present application, and other drawings can be obtained by a person of ordinary skill in the art from the accompanying drawings without creative efforts.
FIG. 1 is a schematic structural view of a vehicle according to some embodiments of the present application;
FIG. 2 is a schematic exploded view of a battery according to some embodiments of the present application;
FIG. 3 is a schematic exploded view of a battery module shown in FIG. 2;
FIG. 4 is a schematic structural view of a cylindrical battery cell according to some embodiments of the present application;
FIG. 5 is a schematic exploded view of a cylindrical battery cell according to some embodiments of the present application;
FIG. 6 is a cross-sectional view of a cylindrical battery cell according to some embodiments of the present application; and
FIG. 7 is a schematic enlarged diagram of portion A of the cylindrical battery cell shown in FIG. 6.

The accompanying drawings are not necessarily drawn to the actual scale.

### List of reference numerals:

X. Axial direction; Y. Radial direction;
1. Vehicle; 2. Battery; 3. Controller; 4. Motor; 5. Box; 5a. First box portion; 5b. Second box portion; 5c. Accommodating space; 6. Battery module; 7. Cylindrical battery cell;
10. Electrode assembly; 111. First electrode tab; 112; Second electrode tab; 12. Body portion;
20. Casing; 21. Shell; 211. End wall; 212. Side wall;
22. End cover; 220. Pressure relief mechanism; 221. Recess; 222. Weak portion.
30. Electrode terminal;
40. Current collector member.

### DETAILED DESCRIPTION

Hereinafter, embodiments of the cylindrical battery cell, the battery pack and the electric device of the present application are described in detail and specifically disclosed with reference to the drawings as appropriate. However, there may be situations where unnecessary detailed illustrations are omitted. For example, there are cases where detailed descriptions of well-known items and repeated descriptions of actually identical structures are omitted, to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. A range defined in this manner may be inclusive or exclusive of the end values, and may be arbitrarily combined, that is, any lower limit may be combined with any upper limit to form a range. For example, if ranges of 60-120 and 80-110 are listed for a particular parameter, it is to be understood that ranges of 60-110 and 80-120 are also expected. Additionally, if the minimum range values 1 and 2 and the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all real numbers between 0-5 are listed herein, and "0-5" is merely an abbreviated representation of the combination of these numbers. In addition, when a parameter is expressed as an integer ≥ 2, it is equivalent to disclosing that the parameter is, for example, an integer of 2, 3, 4, 5, 6, 7, 8, 9, 10, 11, and 12, etc.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all the steps in the present application can be performed in the order described or in a random order, and preferably in the order described. For example, the method includes steps (a) and (b), meaning that the method may include steps (a) and (b) performed sequentially, or may include steps (b) and (a) performed sequentially. For example, the method may further include step (c), meaning that step (c) may be added to the method in any order. For example, the method may include steps (a), (b) and (c), include steps (a), (c) and (b), or steps (c), (a) and (b), and the like.

Reference herein to "an embodiment" means that a particular feature, structure, or characteristic described in connection with the embodiment can be included in at least one embodiment of the present application. The appearance of this phrase anywhere in the specification does not necessarily refer to the same embodiment, or a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association to describe associated objects. It means that there are three relationships, such as A and/or B, indicating that A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of various components in the embodiments of the present application shown in the drawings, as well as the overall thickness, length, width and other dimensions of integrated device, are merely for illustrative purposes, and should not constitute any limitations on the present application.

"Multiple" in the present application refers to two or more (including two). In the embodiments of the present application, the battery cell may be a secondary battery. The secondary battery refers to a battery cell in which the active material can be activated by means of charging for further use after the battery cell is discharged.

The battery cell includes, but is not limited to, a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, or a lead storage battery cell.

For example, the battery cell may be a cylindrical battery cell. The cylindrical battery cell is a battery cell having a shape that is in a cylindrical or similar structure.

The battery mentioned in the embodiments of the present application refers to a single physical module including one or more battery cells to provide a higher voltage and capacity.

In some embodiments, the battery may be a battery module. When there are multiple battery cells, the multiple battery cells are arranged and fixed to form a battery module.

In some embodiments, the battery may be a battery pack, and the battery pack includes a box and a battery cell, where the battery cell or battery module is accommodated in the box.

In some embodiments, the box may serve as a part of a chassis structure of a vehicle. For example, a part of the box may become at least a part of a floor of the vehicle, or a part of the box may become at least a part of a transverse beam and a longitudinal beam of the vehicle.

In some embodiments, the battery may be an energy storage device. The energy storage device includes an energy storage container, an energy storage electric cabinet, or the like.

The battery cell further includes an electrolyte solution and a casing. The electrolyte solution contains an electrolyte salt such as a hexaflurophosphate. The hexaflurophosphate has relatively poor thermal stability, and is prone to decomposition to generate hydrofluoric acid HF. The HF can cause the corrosion of the casing, particularly, a metal casing, which causes a potential risk to the reliability of the cylindrical battery cell during use. In addition, the metal ions generated by corrosion of the metal casing may also exist in the electrolyte solution, and cause adverse effects on the battery cell, for example, deterioration of the cycle performance and storage performance of the battery cell.

In view of this, an embodiment of the present application provides a cylindrical battery cell. A casing of the cylindrical battery cell includes a casing body and a film layer. A matrix element in the film layer is the Ni element, with which the acid corrosion resistance of the film layer is significantly improved. When the cylindrical battery cell further contains a hexafluorophosphate, the Ni element can also effectively improve the acid corrosion resistance of the film layer, and reduce the risk of generation of metal ions due to metal corrosion in the casing. Accordingly, the reliability and cycle performance of the cylindrical battery cell during use are improved

The cylindrical battery cell described in the embodiment of the present application is applicable to a battery and an electric device using a battery.

The cylindrical battery cell, the battery, and the electric device disclosed in the embodiments of the present application may be used in an electric device using a battery as a power supply or various energy storage systems using a battery as an energy storage element. The electric device may be, but is not limited to, a mobile phone, a tablet, a notebook computer, an electric toy, an electric tool, an electromobile, an electric vehicle, a ship, and a spacecraft, etc. The electric toy may include a fixed or mobile electric toy, such as a game console, an electric car toy, an electric ship toy and an electric airplane toy, and the spacecraft may include an airplane, a rocket, an aerospaceplane, a spaceship, and the like.

In the following embodiments, for the convenience of description, the electric device is, for example, a vehicle.

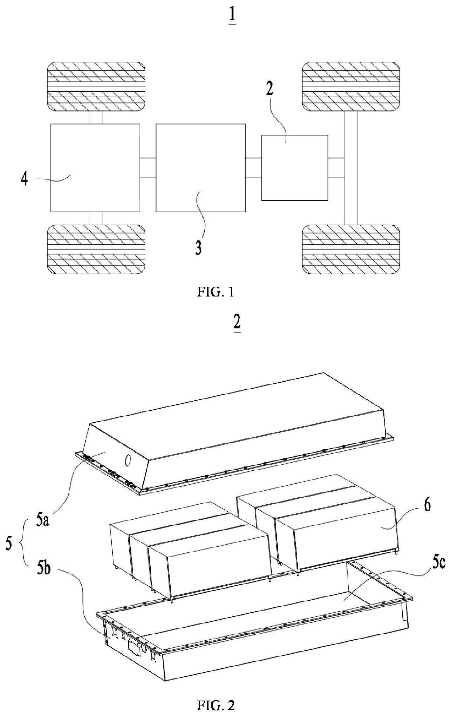

FIG. 1 is a schematic structural view of a vehicle according to some embodiments of the present application.

As shown in FIG. 1, the interior of a vehicle 1 is arranged with a battery 2, and the battery 2 may be arranged at the bottom or head or tail of the vehicle 1. The battery 2 may be configured to power the vehicle 1. For example, the battery 2 may be used as an operating power source of the vehicle 1.

The vehicle 1 may further include a controller 3 and a motor 4. The controller 3 is configured to control the battery 2 to power the motor 4, for example, to meet the operating power demand during the starting, navigation and travelling of the vehicle 1.

In some embodiments of the present application, the battery 2 may not only be used as an operating power source of the vehicle 1, but also be used as a driving power source of the vehicle 1 to replace or partially replace fuel or natural gas to provide driving power for the vehicle 1.

FIG. 2 is a schematic exploded view of a battery according to some embodiments of the present application. As shown in FIG. 2, a battery 2 includes a box 5 and a cylindrical battery cell (not shown in Fig. 2), where the cylindrical battery cell is accommodated in the box 5.

The box 5 is configured to accommodate the cylindrical battery cell, and the box 5 may be of various structures. In some embodiments, the box 5 may include a first box portion 5a and a second box portion 5b. The first box portion 5a and the second box portion 5b are covered by each other, and the first box portion 5a and the second box portion 5b jointly define an accommodating space 5c for accommodating the cylindrical battery cell. The second box portion 5b may be a hollow structure having an opening at one end, the first box portion 5a may be a plate-like structure, and the first box portion 5a covers the open side of the second box portion 5b, to form the box 5 having the accommodating space 5c. It is also possible that both the first box portion 5a and the second box portion 5b are a hollow structure having an opening at one side, and the open side of the first box portion 5a covers the open side of the second box portion 5b to form the box 5 having the accommodating space 5c. Certainly, the first box portion 5a and the second box portion 5b may be in various shapes, such as a cylinder, or a cuboid.

To improve the airtightness after the first box portion 5a and the second box portion 5b are connected, a sealing member, for example, a sealant or a sealing ring, may also be arranged between the first box portion 5a and the second box portion 5b.

Assuming that the first box portion 5a covers a top of the second box portion 5b, the first box portion 5a may also be referred to as an upper box cover, and the second box portion 5b may also be referred to as a lower box.

In the battery 2, one or multiple cylindrical battery cells may be arranged. If multiple cylindrical battery cells are arranged, the multiple cylindrical battery cells may be connected in series, in parallel, or in a hybrid patten. The hybrid pattern means that the multiple cylindrical battery cells are connected in both series and in parallel. The multiple cylindrical battery cells may be directly connected in series or in parallel or in a hybrid pattern, and then the multiple cylindrical battery cells as one piece are accommodated in the box 5. Of course, the multiple cylindrical battery cells may be connected in series or in parallel or in a hybrid pattern to form a battery module 6, and then multiple battery modules 6 are connected in series or in parallel or in a hybrid pattern into one piece and accommodated in the box 5.

The cylindrical battery cell may be the smallest unit forming a battery.

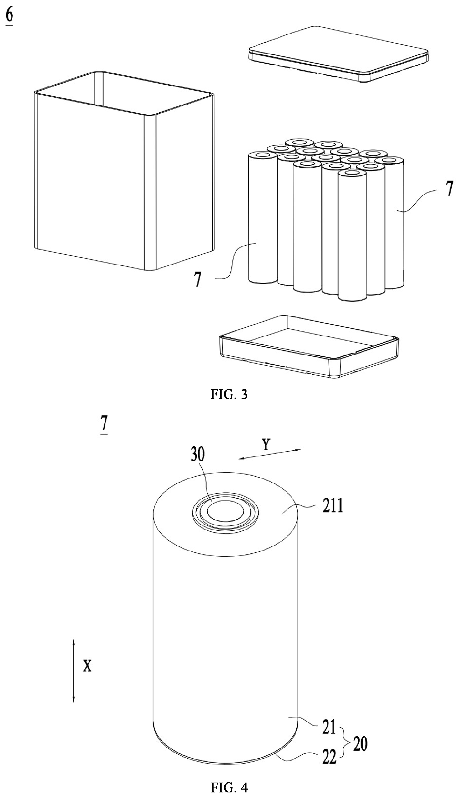

FIG. 3 is a schematic structural view of a battery module shown in FIG. 2.

As shown in FIG. 3, in some embodiments, multiple cylindrical battery cells 7 are arranged, and the multiple cylindrical battery cells 7 are connected in series, in parallel, or in a hybrid pattern to form the battery module 6. The multiple battery modules 6 are then connected in series or in parallel or in a hybrid module into one piece, and accommodated in the box.

The multiple cylindrical battery cells 7 in the battery module 6 may be electrically connected through a bus component, to realize the parallel, serial or hybrid connection of the multiple cylindrical battery cells 7 in the battery module. There may be one or more bus components, and each bus component is configured to electrically connect at least two cylindrical battery cells.

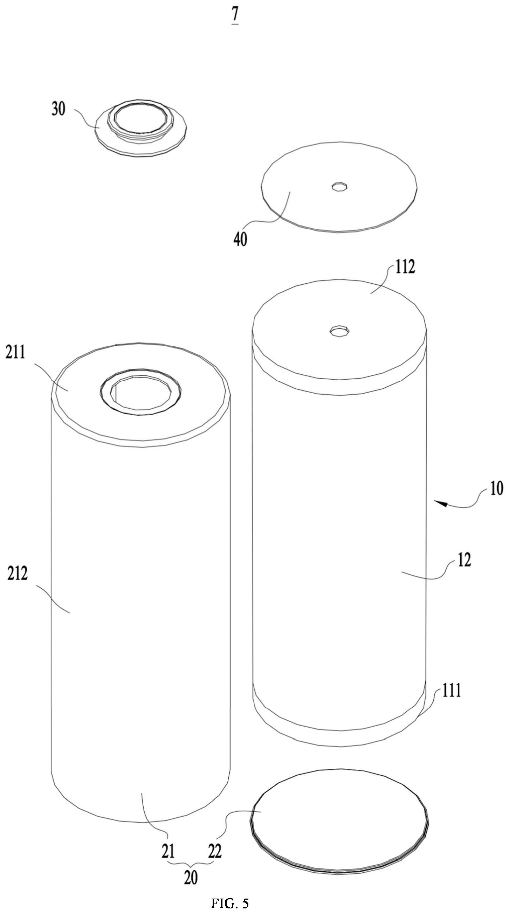

FIG. 4 is a schematic structural view of a cylindrical battery cell according to some embodiments of the present application; and FIG. 5 is a schematic exploded view of the cylindrical battery cell shown in FIG. 4.

As shown in FIGs. 4 and 5, in some embodiments, the cylindrical battery cell 7 includes an electrode assembly 10 and a casing 20, and the electrode assembly 10 is accommodated in the casing 20.

The casing 20 has a cylindrical structure. The casing 20 includes a shell 21, the shell 21 has a cylindrical structure, and correspondingly the electrode assembly 10 has a shape that is also a cylindrical structure.

In some embodiments, the size of the casing 20 in an axial direction X of the cylindrical battery cell 7 is 1.3 times to 2.5 times, for example, 1.3 times, 1.4 times, 1.5 times, 1.6 times, 1.7 times, 1.8 times, 1.9 times, 2.0 times, 2.1 times, 2.2 times, 2.3 times, 2.4 times, or 2.5 times, or a range formed by any two of the above values, the size of the casing 20 in a radial direction Y of the cylindrical battery cell 7. When the casing 20 satisfies the above size requirement, the volume expansion of the electrode assembly 10 can be effectively restricted, so that a pressing force applied on the casing 20 is relatively evenly dispersed, and the casing 20 is not prone to deformation, thereby improving the reliability of the cylindrical battery cell 7 during use.

For example, the size of the casing 20 in the axial direction X is 50 mm to 150 mm, for example, 50 mm, 55 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, or 150 mm, or in a range formed by any two of the above values.

For example, the size of the casing 20 in the radial direction Y is 40 mm to 80 mm, for example, 40 mm, 45 mm, 50 mm, 55 mm, 60 mm, 65 mm, 70 mm, 75 mm, or 80 mm, or in a range formed by any two of the above values.

The electrode assembly 10 includes a positive electrode and a negative electrode. During the charging and discharging process of the cylindrical battery cell 7, active ions (e.g., lithium ions) are intercalated and deintercalated repeatedly between the positive electrode and the negative electrode. Optionally, the electrode assembly 10 further includes an isolation member arranged between the positive electrode and the negative electrode, to reduce the risk of short circuit between the positive electrode and the negative electrode and to allow the active ions to pass through.

In some embodiments, the positive electrode may be a positive electrode plate, and the positive electrode plate may include a positive electrode current collector and a positive electrode film layer disposed on at least one surface of the positive electrode current collector. The positive electrode film layer contains a positive electrode active material.

For example, the positive electrode current collector has two opposite surfaces in its own thickness direction, and the positive electrode film layer is arranged on either or both of the two opposite surfaces of the positive electrode current collector.

For example, the positive electrode current collector may be a metal foil or a composite current collector. For example, the metal foil may be stainless steel, copper, aluminum, nickel, carbon electrode, carbon, nickel, titanium, or aluminum or stainless steel that is surface treated with silver. The composite current collector may include a polymer material substrate layer and a metal layer. The composite current collector can be formed by forming a metal material (aluminium, an aluminium alloy, nickel, a nickel alloy, titanium, a titanium alloy, silver and a silver alloy, etc.) on a high molecular material substrate (such as polypropylene, polyethylene terephthalate, polybutylene terephthalate, polystyrene, and polyethylene).

For example, when the cylindrical battery cell 7 in the embodiment of the present application is a lithium-ion battery, the positive electrode active material may include at least one of the following materials: a phosphate, a layered transition metal oxide, and a modified compound thereof. Optionally, the positive electrode active material may include a layered transition metal oxide and a modified compound thereof, which promotes the energy density of the cylindrical battery cell 7. However, the present application is not limited to such materials, and other conventional materials useful as a positive electrode film layer for batteries may also be used. These positive electrode active materials may be used alone or in combination of two or more thereof.

Examples of the phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium iron manganese phosphate, and a composite material of lithium manganese iron phosphate and carbon.

The layered transition metal oxide includes at least one of a compound having a general formula of LiₐNi_{b}Co_{c}M_{d}OₑA_{f} and a modified compound thereof, where 0.8 ≤ a ≤ 1. 2, 0.3 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, and B, and A includes at least one of N, F, S and Cl. Optionally, 0.5≤b<1; and further optionally, 0.75≤b≤0.98.

Examples of the layered transition metal oxide may include, but are not limited to, at least one of a lithium-cobalt oxide (such as LiCoO₂), a lithium-nickel oxide (such as LiNiO₂), a lithium-manganese oxide (such as LiMnO₂ and LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), LiNi_{0.9}Co_{0.05}Mn_{0.05}O₂ (also abbreviated as Ni90), a lithium-nickel-cobalt-aluminum oxide (such as LiNi_{0.80}Co_{0.15}Al_{0.05}O₂) and a modified compound thereof.

When the cylindrical battery cell 7 according to the embodiment of the present application is a sodium-ion battery, the positive electrode active material may include, but is not limited to, at least of a sodium-transition metal oxide, a polyanionic material (for example, a phosphate, a fluorophosphate, a pyrophosphate, or a sulfate), and a Prussian blue material.

For example, the positive electrode active material for the sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material having a general formula of XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, 0 ≤ x ≤ 2, X includes at least one of H⁺, Li⁺, Na⁺, K⁺ and NH₄⁺, M' is a transition metal cation, and optionally at least of V, Ti, Mn, Fe, Co, Ni, Cu, and Zn, and Y is a halogen anion, and optionally at least one of F, Cl, and Br.

In the embodiment of the present application, the modified compound of each of the above positive electrode active materials may be obtained by doping modification and/or surface coating modification of the positive electrode active material.

The charging and discharging process of the cylindrical battery cell 7 is accompanied by the intercalation/deintercalation and consumption of active ions such as Li. The molar content of Li is different when the cylindrical battery cell 7 is discharged to different states. In the list of positive electrode active materials in the embodiment of the present application, the molar content of Li is the one at the initial state of the material, that is, the state before feeding. After the positive electrode active material is used in a battery system, the molar content of Li may change after the charge and discharge cycles.

In the list of positive electrode active materials in the embodiment of the present application, the molar content of oxygen O is merely a theoretical value. The release of oxygen from the lattice will cause a change in the molar content of oxygen O. In fact, the molar content of oxygen O may fluctuate.

In the embodiment of the present application, the content of an element in the positive electrode active material has a meaning well-known in the art, and can be detected by using a device and a method well-known in the art. For example, following EPA 6010D-2014, an inductively coupled plasma optical emission spectrometry (ICP-OES) test is performed by using an ICP-OES spectrometer (model Thermo ICAP7400). First, 0.4 g of the positive electrode active material is weighted, and 10 ml (concentration: 50%) of aqua regia is added. The system is then placed on a flat plate at 180°C for 30 min. After digestion on the flat plate, the system is added up to a volume of 100 mL, and a quantitative test is performed by using a standard curve method.

In some embodiments, the positive electrode may be made of a foamed metal. The foamed metal may be foamed nickel, foamed copper, foamed aluminum, a foamed alloy, foamed carbon, or the like. When a foamed metal is used as the positive electrode, the surface of the foamed metal may not be arranged with the positive electrode film layer. Certainly, the positive electrode film layer may also be arranged. For example, a lithium source material, metal potassium, or metal sodium may further be filled and/or deposited in the foamed metal, where the lithium source material is metal lithium and/or a lithium-rich material.

In some embodiments, the positive electrode film layer may further optionally include a positive electrode conductive agent. The type of the positive electrode conductive agent in the embodiment of the present application is not particularly limited. For example, the positive electrode conductive agent includes at least one of superconducting carbon, conductive graphite, acetylene black, carbon black, Ketjen black, carbon dots, carbon nanotubes, graphene, and carbon nanofibers. In some embodiments, the content in percentage by weight of the positive electrode conductive agent in the positive electrode film layer is ≤5 wt%.

In some embodiments, the positive electrode film layer may further optionally include a positive electrode binder. The type of the positive electrode binder in the embodiment of the present application is not particularly limited. For example, the positive electrode binder may include at least one of polyvinylidene difluoride (PVDF), polytetrafluoroethylene (PTFE), a vinylidene difluoride-tetrafluoroethylene-propylene terpolymer, a vinylidene difluoride-hexafluoropropylene-tetrafluoroethylene terpolymer, a tetrafluoroethylene-hexafluoropropylene copolymer and a fluorine-containing acrylate resin. In some embodiments, the content in percentage by weight of the positive electrode binder in the positive electrode film layer is ≤ 5 wt%.

The positive electrode film layer is usually formed by coating a positive electrode slurry on the positive electrode current collector, followed by drying and cold pressing. The positive electrode slurry is usually formed by dispersing the positive electrode active material, an optional conductive agent, an optional binder, and any other components in a solvent and stirring uniformly. The solvent may be, but is not limited to, N-methyl pyrrolidone (NMP).

In some embodiments, the negative electrode may be a negative electrode plate, and the negative electrode plate may include a negative electrode current collector and a negative electrode film layer disposed on at least one surface of the negative electrode current collector. The negative electrode film layer contains a negative electrode active material.

For example, the negative electrode current collector has two opposite surfaces in its own thickness direction, and the negative electrode film layer is arranged on either one or both of the two opposite surfaces of the negative electrode current collector.

For example, the negative electrode current collector may be a metal foil, a foamed metal, or a composite current collector. For example, the metal foil may be aluminum or stainless steel that is surface treated with silver, stainless steel, copper, aluminum, nickel, carbon electrode, carbon, nickel, or titanium. The foamed metal may be foamed nickel, foamed copper, foamed aluminum, a foamed alloy, foamed carbon, or the like. The composite current collector may include a polymer material substrate layer and a metal layer. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

For example, the negative electrode active material may be a well-known negative electrode active material for the cylindrical battery cell 7 in the art. For example, the negative electrode active material may include at least one of a carbon material (for example, the carbon material includes at least one of artificial graphite, natural graphite, soft carbon, and hard carbon), a silicon-based material, a tin-based material, lithium titanate, and the like. The silicon-based material may include at least one of elemental silicon, a silicon oxide, a silicon-carbon composite, a silicon-nitrogen composite, and a silicon alloy. The tin-based material may include at least one of elemental tin, a tin oxide compound, and a tin alloy. However, the present application is not limited to such materials, and other conventional materials useful as a negative electrode film layer for batteries may also be used. These negative electrode film layer may be used alone or in combination of two or more thereof.

In some embodiments, the negative electrode active material includes the silicon content existing in the form of a silicon-based material. For example, the silicon-based material may include at least one of elemental silicon, a silicon oxide, a silicon-carbon composite, a silicon-nitrogen composite, and a silicon alloy. The introduction of the silicon element can improve the energy density of the cylindrical battery cell 7.

In some embodiments, the content in percentage by weight of the silicon element in the negative electrode film layer is 1 wt% to 32 wt%, optionally 2 wt% to 19 wt%, and further optionally 6 wt% to 13 wt%. In the cylindrical battery cell 7, with a content in percentage by weight of the silicon element in the above range, the energy density of the cylindrical battery cell 7 is improved. In addition, the casing 20 of the cylindrical structure can constrain the expanded electrode assembly 10, so that an action force applied on the casing 20 by the electrode assembly 10 is relatively evenly dispersed, and the casing 20 is not prone to deformation, thereby improving the structural stability of the casing 20, and improving the reliability of the cylindrical battery cell 7 during use.

In the embodiment of the present application, the content in percentage by weight of the silicon element in the negative electrode film layer has the meaning well-known in the art, and can be determined by using a device and a method well-known in the art. For example, the negative electrode plate is soaked in a solvent such as water, the negative electrode active material is separated from the negative electrode current collector, and then the negative electrode active material is obtained by filtration under suction. The content of the silicon element in the negative electrode active material can be obtained following the standard GB/T30902-2014 using ICAP7400 model ICP-OES spectrometer from Thermo Fisher Scientific.

In some embodiments, the negative electrode film layer may further optionally include a negative electrode conductive agent. The type of the negative electrode conductive agent in the embodiment of the present application is not particularly limited. For example, the negative electrode conductive agent includes at least one of superconducting carbon, conductive graphite, acetylene black, carbon black, Ketjen black, carbon dots, carbon nanotubes, graphene, and carbon nanofibers. In some embodiments, the content in percentage by weight of the negative electrode conductive agent in the negative electrode film layer is ≤5 wt%.

In some embodiments, the negative electrode film layer may further optionally include a negative electrode binder. The type of the negative electrode binder is not particularly limited in the embodiment of the present application. For example, the negative electrode binder may include at least one of styrene-butadiene rubber (SBR), water-soluble unsaturated resin SR-1B, waterborne acrylic resin (for example, polyacrylic acid PAA, poly(methyl methacrylate) PMMA, and sodium polyacrylate PAAS), polyacrylamide (PAM), polyvinyl alcohol (PVA), sodium alginate (SA), and carboxymethyl chitosan (CMCS). In some embodiments, the content in percentage by weight of the negative electrode binder in the negative electrode film layer is ≤ 5%.

In some embodiments, the negative electrode film layer may further optionally include other aids. For example, the other aids may include a thickener, for example, sodium carboxymethyl cellulose (CMC-Na) or a PTC thermistor material. In some embodiments, the content in percentage by weight of the other aids in the negative electrode film layer is ≤ 2 wt%.

In some embodiments, the material of the positive electrode current collector may be aluminum, and the material of the negative electrode current collector may be copper.

In some embodiments, the isolation member includes a separator. The type of the separator is not particularly limited in the present application, and any well-known separator with a porous structure having good chemical stability and mechanical stability can be used.

The type of the separator is not particularly limited in the embodiment of present application, and any well-known separator with a porous structure having good chemical stability and mechanical stability can be used.

In some embodiments, the material of the separator may include one or more of glass fiber, non-woven cloth, polyethylene, polypropylene, and polyvinylidene fluoride. The separator may be a single-layer film or a multi-layer composite film, which is not particularly limited. When the separator is a multi-layer composite film, the material of each layer may be the same or different, which is not particularly limited.

In some embodiments, the separator may include a porous base film and a coating disposed on at least one side of the porous base film, where the coating may include at least one of inorganic particles or organic particles.

The porous base film may include one or more of polyethylene and polypropylene.

The inorganic particles have good heat resistance, and can improve the heat resistance of the whole separator. In a working voltage range of the Na-ion battery, the inorganic particles basically do not undergo an oxidation and reduction reaction with the metal dendrite. In other words, the inorganic particles are configured not to undergo an oxidation and reduction reaction with an alkali metal and/or an alkali earth metal at a nominal voltage of the Na-ion battery.

In some embodiments, the inorganic particles include one or more of boehmite γ-AlOOH, alumina Al₂O₃, aluminum hydroxide Al(OH)₃, barium sulfate BaSO₄, magnesia MgO, magnesium hydroxide Mg(OH)₂, calcium oxide CaO, cerium oxide CeO₂, zirconium titanite SrTiO₃, barium titanate BaTiO₃ and magnesium fluoride MgF₂.

In some embodiments, the inorganic particles include at least one of polystyrene, polyethlylene, polyimide, melamine resins, phenolic resins, polyprolylene, polyesters (for example, polyethylene terephthalate, polyethylene naphthalate, and polybutylene terephthalate), polyphenylene sulfide, aromatic polyamide, polyamideimide, polyimide, a copolymer of butyl acrylate and ethyl methacrylate, and a mixture thereof.

In some embodiments, the cylindrical battery cell 7 further includes an electrolyte solution.

During the charging and discharging of the battery cell, active ions are intercalated and deintercalated repeatedly between the positive electrode plate and the negative electrode plate, and the electrolyte solution functions to conduct active ions between the positive electrode plate and the negative electrode plate. The type of the electrolyte solution is not particularly limited in the embodiment of the present application, and can be selected according to actual requirements.

The electrolyte solution includes an electrolyte salt and a solvent. The types of the electrolyte salt and the solvent are not particularly limited, and may be selected according to actual requirements.

In some embodiments, the electrolyte solution optionally further includes an additive. For example, the additive may include a negative electrode film-forming additive, a positive electrode film-forming additive, and also additives that can improve certain battery performances, such as an additive that improves the overcharge performance of the battery, an additive that improves the high- or low-temperature performance of the battery, and the like.

For example, the additive includes at least one of a cyclic carbonate compound containing an unsaturated bond, a sulfate compound, a sulfite compound, a sultone compound, a disulfonic acid compound, a nitrile compound, an aromatic compound, an isocyanate compound, a phosphazene compound, an anhydride, a cyclic anhydride compound, a phosphite compound, a phosphate compound, a borate compound, and a carboxylate compound.

As shown in FIGs. 4 and 5, in some embodiments, the electrode assembly 10 may be of a wound structure or a laminated structure. Optionally, the electrode assembly 10 is of a wound structure. The positive electrode plate and the negative electrode plate are wound into a wound structure.

For example, multiple positive electrode plates and multiple negative electrode plates are arranged respectively, and the multiple positive electrode plates and the multiple negative electrode plates are alternately stacked.

In some embodiments, the casing 20 includes a shell 21 and an end cover 22. The shell 21 has an opening, and the end cover 22 is configured to cover the opening.

The shell 21 is a component configured to mate with the end cover 22 to form an internal cavity of the cylindrical battery cell 7, where the formed internal cavity is configured to accommodate the electrode assembly 10, the electrolyte, and other components.

The shell 21 and the end cover 22 can be separate components. For example, the opening may be provided on the shell 21, and the end cover 22 covers the opening at the opening to form the internal cavity of the cylindrical battery cell 7.

The end cover 22 is connected to the shell 21 by welding, bonding, clamping, or other means.

The shell 21 may have an opening at one end or at two ends. In some embodiments, the shell 21 may be a structure having an opening at one side, and one end cover 22 is arranged and covers the shell 21. In some other embodiments, the shell 21 may alternatively be a structure having an opening at two sides, two end covers 22 are arranged, and the two end covers 22 respectively cover the two openings of the shell 21.

In some embodiments, the shell 21 includes a side wall 212 and an end wall 211 connected to the side wall 212. The end wall 211 and the end cover 22 are opposite to each other in the axial direction of the cylindrical battery cell 7, the end cover 22 is sealingly connected to the side wall 212, and the side wall 212 is disposed around the electrode assembly 10.

In some embodiments, the end wall 211 and the side wall 212 may have the same polarity.

In some embodiments, the end wall 211 and the side wall 212 may be an integrally formed structure, that is, the shell 21 is an integrally formed component. Certainly, the end wall 211 and the side wall 212 may alternatively be two separate components that are connected by welding, riveting, or bonding.

From the profile of the electrode assembly 10, the electrode assembly 10 includes a body portion 12, a first tab 111, and a second tab 112. The first tab 111 and the second tab 112 have opposite polarities, and the first tab 111 and the second tab 112 respectively protrude from the body portion 12. The first tab 111 is a portion of the first plate that is not coated with the active material layer, and the second tab 112 is a portion of the second plate that is not coated with the active material layer. The first tab 111 and the second tab 112 are configured to draw a current from the body portion 12. The first electrode plate and the second electrode plate have opposite polarities. In other words, one of the first electrode plate and the second electrode plate is the positive electrode plate, and the other of the first electrode plate and the second electrode plate is the negative electrode plate.

For example, the first tab 111 is a negative tab, and the second tab 112 is a positive tab. A portion of the negative electrode current collector in the negative electrode plate that is not coated with the active material layer is the negative tab, the active material coated on the negative electrode current collector in the negative electrode plate forms the negative electrode film layer, and the negative electrode film layer and the portion of the negative electrode current collector coated with the active material are a part of the body portion 12. A portion of the positive electrode current collector in the positive electrode plate that is not coated with the active material layer is the positive tab, the active material applied to the positive electrode current collector in the positive electrode plate forms the positive electrode film layer, and the positive electrode film layer and the portion of the positive electrode current collector coated with the active material form a part of the body portion 12.

In some embodiments, the cylindrical battery cell 7 includes a first electrode lead-out portion and a second electrode lead-out portion. The first electrode lead-out portion is electrically connected to the first tab 111, and the second electrode lead-out portion is electrically connected to the second tab 112.

In an axial direction of the body portion 12, the first electrode lead-out portion and the second electrode lead-out portion may be located at two sides of the electrode assembly 10, or the first electrode lead-out portion and the second electrode lead-out portion are located at the same side of the electrode assembly 10. For example, the second electrode lead-out portion includes an electrode terminal 30 that is insulatively disposed on the end wall 211, and the first electrode lead-out portion is the end wall 211.

The first tab 111 and the second tab 112 may extend out from the same side or from opposite sides of the body portion 12.

The first tab 111 and the second tab 112 may be respectively disposed at two sides of the body portion 12 in the axial direction. In other words, the first tab 111 and the second tab 112 are respectively disposed at two ends of the electrode assembly 10 in the axial direction.

Optionally, the first tab 111 is wound around the central axis of the electrode assembly 10 into multiple circles, and the first tab 111 includes multiple circles of tab layers. After the winding is completed, the first tab 111 is generally cylindrical, and a gap is reserved between two adjacent circles of tab layers. In the embodiment of the present application, the first tab 111 may be processed, to reduce the gap between the tab layers, so that the first tab 111 is connected to other conductive structures. For example, in the embodiment of the present application, the first tab 111 may be flattened, so that ends of the first tab 111 that are away from the body portion 12 are drawn and gathered together. The flattening causes the formation of a dense end surface at one end of the first tab 111 away from the body portion 12, to reduce gaps between the tab layers. In this way, the first tab 111 can be conveniently connected to other conductive structures. Alternatively, in the embodiment of the present application, a conductive material may be filled between two adjacent circles of tab layers, to reduce the gap between the tab layers.

Optionally, the second tab 112 is wound around the central axis of the electrode assembly 10 into multiple circles, and the second tab 112 includes multiple circles of tab layers. For example, the second tab 112 is also flattened, to reduce the gaps between the tab layers of the second tab 112.

The first tab 111 is electrically connected to the end cover 22. The first tab 111 may be directly electrically connected to the end cover 22, or indirectly electrically connected to the end cover 22 through other conductive structures. The end cover 22 is electrically connected to the end wall 211.

The second tab 112 is electrically connected to the electrode terminal 30 of the cylindrical battery cell 7, and the electrode terminal 30 is insulatively disposed on the end wall 211. The second tab 112 may be directly electrically connected to the electrode terminal 30, or indirectly electrically connected to the electrode terminal 30 through other conductive structures.

In some embodiments, the second tab 112 may be directly connected to the electrode terminal 30, for example, the second tab 112 is connected to the electrode terminal 30 by welding, abutting, or other means. Alternatively, the second tab 112 may be indirectly connected to the electrode terminal 30 through other conductive components (for example, a current collector member 40), to enable the electrical connection between the second tab 112 and the electrode terminal 30.

The electrode terminal 30 is insulatively disposed on the end wall 211. Therefore, the electrode terminal 30 and the end wall 211 may have different polarities, and the electrode terminal 30 and the end wall 211 can be used as different output terminals.

The end wall 211 may be provided with an electrode lead-out hole. The electrode terminal 30 is insulatively arranged on the end wall 211 and is installed in the electrode lead-out hole. The electrode lead-out hole facilitates the drawing of the electric energy from the electrode assembly 10 to the outside of the shell 21.

The central axis of the electrode assembly 10 is a virtual straight line. The central axis of the electrode assembly 10 may pass through the electrode lead-out hole, or may be arranged staggered from the electrode lead-out hole. This is not limited in the present application.

The electrode terminal 30 may be fixed to the end wall 211. The electrode terminal 30 may be wholly fixed on an outer side of the end wall 211, or may extend into the interior of the casing 20 through the electrode lead-out hole.

When the first tab 111 is a negative tab and the second tab 112 is a positive tab, the end wall 211 is a negative output of the cylindrical battery cell 7, and the electrode terminal 30 is a positive output of the cylindrical battery cell 7. When the first tab 111 is the positive tab and the second tab 112 is the negative tab, the end wall 211 is a positive output of the cylindrical battery cell 7, and the electrode terminal 30 is a negative output of the cylindrical battery cell 7.

In some embodiments, the cylindrical battery cell 7 includes a casing 20, an electrode assembly 10, and an electrolyte solution. The casing 20 accommodates the electrode assembly 10 and the electrolyte solution. The electrolyte solution contains an electrolyte salt including a hexafluorophosphate. The casing 20 includes a casing body and a film layer. The film layer is disposed on at least a surface of the casing body that faces the electrode assembly 10, and a matrix element in the film layer is the Ni element.

The hexafluorophosphate may include one or more of lithium hexafluorophosphate, sodium hexafluorophosphate, and the like. The hexafluorophosphate have a good solvability and a high electrical connectivity in an organic solution, so that the battery cell has a good kinetic performance. In addition, the hexafluorophosphate can form an excellent solid electrolyte interface film (SEI film) on the surface of the negative electrode film layer, thus providing excellent protection to the negative electrode film layer.

The matrix element in the film layer in the embodiment of the present application is the Ni element, with which the acid corrosion resistance of the film layer is significantly improved. When the cylindrical battery cell 7 contains the hexafluorophosphate, the Ni element can also effectively improve the acid corrosion resistance of the film layer, and reduce the risk of generation of metal ions due to metal corrosion in the casing 20. In addition, the casing 20 of the cylindrical battery cell 7 can effectively disperse an action force in the system, so that the casing 20 is uniformly stressed and is unlikely to be deformed, whereby the reliability and cycle performance of the cylindrical battery cell 7 during use are improved. In the embodiment of the present application, the matrix element refers to an element having the largest proportion in the film layer. The nickel element can exist in the film layer in the form of elemental Ni or a nickel alloy. The nickel alloy may be an alloy formed by Ni as a matrix element with iron and C as auxiliary elements.

In some embodiments, the molar concentration of the hexafluorophosphate is less than or equal to 1.2 mol/L, optionally less than or equal to 0.9 mol/L, optionally 0.2 mol/L to 0.8 mol/L, and further optionally 0.3 mol/L to 0.7 mol/L. With a molar concentration of the hexafluorophosphate in the above range, the corrosion of the casing 20 is further reduced, and the reliability and cycle performance of the cylindrical battery cell 7 during use are further improved.

For example, the molar concentration of the hexafluorophosphate can be 0.1 mol/L, 0.15 mol/L, 0.2 mol/L, 0.25 mol/L, 0.3 mol/L, 0.35 mol/L, 0.4 mol/L, 0.45 mol/L, 0.5 mol/L, 0.55 mol/L, 0.6 mol/L, 0.65 mol/L, 0.7 mol/L, 0.75 mol/L, 0.8 mol/L, 0.85 mol/L, 0.9 mol/L, 1.0 mol/L, 1.1 mol/L, 1.15 mol/L, 1.2 mol/L, or in a range formed by any two of the above values.

In some embodiments, the thickness of the film layer is 1.5 µm to 6.0 µm and optionally 2.0 µm to 4.0 µm. With the thickness of the film layer in the above range, the corrosion resistance of the film layer is improved, and thus the reliability and cycle performance of the cylindrical battery cell 7 during use are improved.

For example, the thickness of the film layer may be 1.5 µm, 1.8 µm, 2µm, 2.5 µm, 3 µm, 3.5 µm, 4 µm, 4.5 µm, 5 µm, 5.5 µm, 6 µm, 6.5 µm or in a range formed by any two of the above values.

In some embodiments, the content in percentage by weight of the Ni element in the film layer is 70 wt% to 100 wt% and optionally 80 wt% to 95 wt%. With a content in percentage by weight of the Ni element in the above range, the corrosion resistance of the film layer is improved, and thus the reliability and cycle performance of the cylindrical battery cell 7 during use are improved.

For example, the content in percentage by weight the Ni element in the film layer may be 70 wt%, 71 wt%, 72 wt%, 73 wt%, 74 wt%, 75 wt%, 76 wt%, 80 wt%, 82 wt%, 85 wt%, 88 wt%, 90 wt%, 92 wt%, 95 wt%, 98 wt%, 99 wt%, 100 wt%, or in a range formed by any two of the above values.

In some embodiments, the film layer further contains the iron element. The content in percentage by weight of the iron element in the film layer is 0.1 wt% to 10 wt%, and optionally 1 wt% to 5 wt%. With a content in percentage by weight of the iron element in the above range, the electrical conductivity of the casing 20 is effectively improved, thereby facilitating the electronic transmission.

For example, the content in percentage by weight the iron element in the film layer may be , or 0.1 wt%, 0.5 wt%, 0.8 wt%, 1 wt%, 1.2 wt%, 1.5wt%, 2 wt%, 2.5 wt%, 3 wt%, 3.5 wt%, 4 wt%, 4.5 wt%, 5 wt%, 5.5 wt%, 6 wt%, 6.5 wt%, 7 wt%, 7.5 wt%, 8 wt%, 8.5 wt%, 9 wt%, 10 wt% or in a range formed by any two of the above values.

In some embodiments, the film layer further contains the carbon element. The content in percentage by weight of the carbon element in the film layer is 0.1 wt% to 15 wt% and optionally 4 wt% to 12 wt%. With a content in percentage by weight of the carbon element in the above range, the electrical conductivity of the casing 20 is effectively improved, thereby facilitating the electronic transmission.

For example, the content in percentage by weight of the carbon element in the film layer may be 0.1 wt%, 0.5 wt%, 0.8 wt%, 1 wt%, 1.2 wt%, 1.5wt%, 2 wt%, 2.5 wt%, 3 wt%, 3.5 wt%, 4 wt%, 4.5 wt%, 5 wt%, 5.5 wt%, 6 wt%, 6.5 wt%, 7 wt%, 7.5 wt%, 8 wt%, 8.5 wt%, 9 wt%, 10 wt%, 11 wt%, 12 wt%, 13 wt%, 14 wt%, 15 wt% or in a range formed by any two of the above values.

In some embodiments, the electrolyte salt further includes a sulfonimide salt, and the hexafluorophosphate and the sulfonimide salt are used in combination, so that the thermal stability of the electrolyte solution system is relatively high, the stability of the electrolyte solution is improved, and the cycle performance of the cylindrical battery cell 7 is improved.

The sulfonimide salt may include one or more of lithium sulfonimide and sodium sulfonimide.

In some embodiments, the ratio of the molar concentration of the sulfonimide salt to the molar concentration of the hexafluorophosphate is 0.06 to 6, optionally 0.2 to 2, and optionally 0.3 to 1.5. With a ratio of the molar concentration of the sulfonimide salt to the molar concentration of the hexafluorophosphate in the above range, the electrolyte salt has excellent thermal stability and is not prone to thermal decomposition to cause acid corrosion; and the electrolyte salt has excellent chemical stability, whereby the stability of the electrolyte salt is further improved, and the reliability and cycle performance of the cylindrical battery cell during use are further improved.

For example, the ratio of the molar concentration of the sulfonimide salt to the molar concentration of the hexafluorophosphate is 0.06, 0.08, 0.1, 0.15, 0.2, 0.25, 0.3, 0.35, 0.4, 0.45, 0.5, 0.6, 0.7, 0.8, 0..9, 1, 1.1, 1.2, 1.3, 1.4, 1.5, 1.6, 1.7, 1.8, 1.9, 2, 2.2, 2.5, 2.8, 3, 3.2, 3.5, 3.8, 4, 4.2, 4.5, 4.8, 5, 5.2, 5.5, 5.8, 6, or in a range formed by any two of above values.

In some embodiments, the molar concentration of the electrolyte salt is 0.5 mol/L to 2 mol/L, and optionally the molar concentration of the electrolyte salt is 0.6 mol/L to 1.5 mol/L. With a molar concentration of the electrolyte salt in the above range, the stability of the electrolyte salt is further improved, and the reliability and cycle performance of the cylindrical battery cell during use are further improved; and the transmission of the active ions through the liquid phase is facilitated, thereby improving the kinetic performance of the cylindrical battery cell.

For example, the molar concentration of the electrolyte salt can be 0.5 mol/L, 0.55 mol/L, 0.6 mol/L, 0.65 mol/L, 0.7 mol/L, 0.8 mol/L, 0.9 mol/L, 1 mol/L, 1.1 mol/L, 1.2 mol/L, 1.3 mol/L, 1.4 mol/L, 1.5 mol/L, 1.6 mol/L, 1.7mol/L, 1.8 mol/L, 1.9 mol/L, 2 mol/L, or in a range formed by any two of the above values.

In some embodiments, when the molar concentration of the hexafluorophosphate is 0.2 mol/L to 0.8 mol/L, the thickness of the film layer is 1.5 µm to 6.0 µm. By using such a molar concentration of the hexafluorophosphate in combination with such a thickness of the film layer, both the reliability and the cycle performance of the cylindrical battery cell 7 during use are improved.

In some embodiments, when the molar concentration of the hexafluorophosphate salt is 0.3 mol/L to 0.7 mol/L, the thickness of the film layer is 2.0 µm to 4.0 µm. By using such a molar concentration of the hexafluorophosphate in combination with such a thickness of the film layer, both the reliability and the cycle performance of the cylindrical battery cell 7 during use are improved.

In some embodiments, when the molar concentration of the hexafluorophosphate is 0.2 mol/L to 0.8 mol/L, the content in percentage by weight of the nickel element in the film layer is 70 wt% to 100 wt%. By using such a molar concentration of the hexafluorophosphate in combination with such a content in percentage by weight of the nickel element in the film layer, both the reliability and the cycle performance of the cylindrical battery cell 7 during use are improved.

In some embodiments, when the molar concentration of the hexafluorophosphate salt is 0.3 mol/L to 0.7 mol/L, the content in percentage by weight of the nickel element in the film layer is 80 wt% to 95 wt%. By using such a molar concentration of the hexafluorophosphate in combination with such a content in percentage by weight of the nickel element in the film layer, both the reliability and the cycle performance of the cylindrical battery cell 7 during use are improved.

In some embodiments, when the ratio of the molar concentration of the sulfonimide salt to the molar concentration of the hexafluorophosphate is from 0.06 to 6, the thickness of the film layer is 1.5 µm to 6.0 µm. By using the electrolyte salt in combination with such a thickness of the film layer, both the reliability and the cycle performance of the cylindrical battery cell 7 during use are improved.

In some embodiments, when the ratio of the molar concentration of the sulfonimide salt to the molar concentration of the hexafluorophosphate is from 0.2 to 2, the thickness of the film layer is 2.0 µm to 4.0 µm. By using the electrolyte salt in combination with such a thickness of the film layer, both the reliability and the cycle performance of the cylindrical battery cell 7 during use are improved.

In some embodiments, when the ratio of the molar concentration of the sulfonimide salt to the molar concentration of the hexafluorophosphate is from 0.06 to 6, the content in percentage by weight of the nickel element is 70 wt% to 100 wt%. By using the electrolyte salt in combination with such a content in percentage by weight of the nickel element, both the reliability and the cycle performance of the cylindrical battery cell 7 during use are improved.

In some embodiments, when the ratio of the molar concentration of the sulfonimide salt to the molar concentration of the hexafluorophosphate is from 0.2 to 2, the content in percentage by weight of the nickel element is 80 wt% to 95 wt%. By using the electrolyte salt in combination with such a content in percentage by weight of the nickel element, both the reliability and the cycle performance of the cylindrical battery cell 7 during use are improved.

In some embodiments, when the ratio of the molar concentration of the sulfonimide salt to the molar concentration of the hexafluorophosphates is 0.3 to 1.5, the layered transition metal oxide includes at least one of a compound having a chemical formula of LiₐNi_{b}Co_{c}M_{d}O_{c}A_{f} and a modified compound thereof, where 0.3 ≤ b < 1, optionally, 0.5 ≤ b < 1, and further optionally, 0.75 ≤ b ≤ 0. 98. A high content in percentage by weight of the nickel element enables an active interface performance between the layered transition metal oxide and the electrolyte solution. However, when the ratio of the molar concentration of the sulfonimide salt to the molar concentration of the hexafluorophosphate falls within the above range, the sulfonimide salt can improve the interface stability between the layered transition metal oxide and the electrolyte solution, reduce the risk of occurrence of the side reaction, and improve the cycle performance of the cylindrical battery cell 7.

For example, b may be 0.3, 0.4, 0.5*,* 0.55, 0.6, 0.65, 0.7, 0.75, 0.8, 0.85, 0.88, 0.9, 0.91, 0.92, 0.93, 0.94, 0.95, 0.96, 0.97, 0.98 or in a range formed by any two of the above values.

In some embodiments, the sulfonimide salt contains an anion of Formula A: 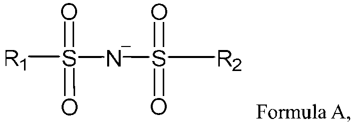 where in Formula A, R₁ and R₂ each independently include a halogen atom or a C1 to C6 haloalkyl group.

The thermal stability of the sulfonimide salt of the above material is excellent, which reduces the corrosion of the casing 20 by the electrolyte salt and improves the reliability and cycle performance of the cylindrical battery cell.

In some embodiments, the halogen atom includes fluorine atom.

In some embodiments, the C1 to C6 haloalkyl group includes a C1 to C6 fluoroalkyl group.

In some embodiments, R₁ and R₂ each independently include a fluorine atom or a C1 to C3 fluoroalkyl group. The material is easily disassociated to generate the active ions, and the viscosity of the electrolyte salt is relatively low, which improves the liquid-phase transmission of the electrolyte solution and improves the dynamic performance of the electrolyte solution.

For example, the anion of Formula A includes one or more of anions of Formula A-1 to Formula A-5:

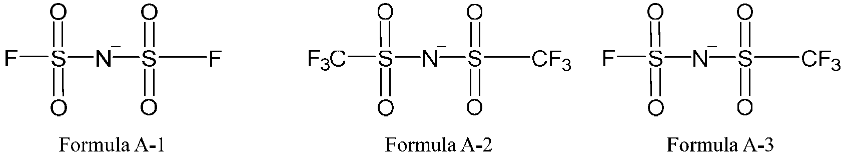

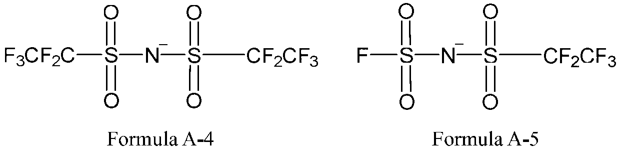

Optionally, the anion of Formula A includes one or more of the anions of Formula A-1 to Formula A-2:

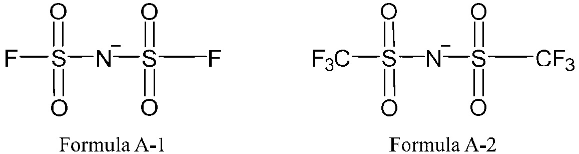

The film layer serves to protect the casing body. The casing body is made of various materials. For example, the base material of the casing body includes, but is not limited to, copper, iron, aluminum, steel, and an aluminum alloy. Optionally, the base material of the casing body includes steel, for example, stainless steel, which has excellent mechanical strength, and is not prone to deformation, thereby further improving the reliability of the cylindrical battery cell 7 during use. In the embodiments of the present application, the base material is a material with the largest proportion. Certainly, the casing body may be formed of a steel material.

The casing 20 includes the shell 21 and the end cover 22. The shell 21 may include the casing body. In this case, the shell 21 includes the casing body and the film layer. The end cover 22 may include the casing body. In this case, the end cover 22 includes the casing body and the film layer. The shell 21 and the end cover 22 both include the casing body.

In some embodiments, the electrolyte solution contains a chain ester solvent. The content in percentage by weight of the chain ester solvent in the electrolyte solution is greater than or equal to 25.5 wt%.

In some embodiments, the cylindrical battery cell 7 includes a casing 20, an electrode assembly 10, and an electrolyte solution. The casing 20 accommodate the electrode assembly 10 and the electrolyte solution. The casing 20 has a cylindrical structure. The electrolyte solution includes a chain ester solvent, and the content in percentage by weight the chain ester solvent in the electrolyte solution is greater than or equal to 25.5 wt%.

The content in percentage by weight of the chain ester solvent is greater than or equal to 25.5 wt%. Accordingly, the electrical conductivity of the electrolyte solution is relatively high, which improves the transmission of active ions through the liquid phase, and improves the fast charging and discharging capability of the cylindrical battery cell 7, thereby improving the rate performance of the cylindrical battery cell 7. However, this type of solvent may have the problem of gas generation due to decomposition in the cyclic charging and discharging process of the cylindrical battery cell 7. The casing 20 of the cylindrical battery cell 7 adopts a cylindrical structure. The cylindrical structure can evenly disperse pressure inside the cylindrical battery cell 7, enable the casing 20 to be evenly stressed, and effectively increase the pressure resistance of the casing 20, thereby improving the reliability of the cylindrical battery cell 7 during use.

Moreover, the cyclic charging and discharging process of the electrode assembly 10 may be accompanied with the extrusion and reflow of the electrolyte solution. Because the casing 20 has a cylindrical structure and the size of the cylindrical battery cell 7 in the axial direction may be much greater than the size in the radial direction, the reflow path of the electrolyte solution in the axial direction is long, and the electrode assembly 10 cannot be fully infiltrated. However, in the embodiment of the present application, a chain ester solvent is used in the electrolyte solution, and the content in percentage by weight of the chain ester solvent is greater than or equal to 25.5 wt%, so that the electrolyte solution system has a relatively low viscosity, and flows more easily to infiltrate the electrode assembly 10, thereby improving the fast charging and discharging capability of the cylindrical battery cell 7, and further improving the rate performance of the cylindrical battery cell 7.

Therefore, in the embodiment of the present application, by the use of a particular electrolyte solution system and the cylindrical casing 20 in combination, the rate performance and the reliability of the cylindrical battery cell 7 during use can be both improved.

In some embodiments, the content in percentage by weight the chain ester solvent in the electrolyte solution is 25.5 wt% to 76.5 wt%, optionally, 25.5 wt% to 70 wt%, and further optionally, 42.5 wt% to 70 wt%. With a content in percentage by weight of the chain ester solvent in the above range, the rate performance and the reliability of the battery cell 7 during use is further improved, and the cycle performance of the battery cell 7 is also further improved.

For example, the content in percentage by weight of the chain ester solvent in the electrolyte solution is 25.5 wt%, 26 wt%, 27 wt%, 28wt%, 29 wt%, 30 wt%, 32 wt%, 35 wt%, 38wt%, 40 wt%, 42 wt%, 45 wt%, 48 wt%, 50wt%, 52 wt%, 55 wt%, 58 wt%, 60 wt%, 62wt%, 65 wt%, 68 wt%, 70 wt%, 72 wt%, 75wt%, 76.5 wt%, or in a range formed by any two of the above values.

In some embodiments, the chain ester solvent includes a chain carbonate. The chain carbonate can improve the electrical connectivity of the electrolyte solution, improve the dynamic performance of liquid-phase transmission of the electrolyte solution, and further improve the rate performance and the reliability of the cylindrical battery cell 7 during use.

In some embodiments, the content in percentage by weight of the chain carbonate in the electrolyte solution is 4 wt% to 70 wt%. Optionally, the content in percentage by weight of the chain carbonate is 4 wt% to 42.5 wt%, and optionally, 8.5 wt% to 35 wt%. With a content in percentage by weight of the chain carbonate in the above range, the electrical connectivity of the electrolyte solution is improved, the dynamic performance of liquid-phase transmission of the electrolyte solution is improved, the rate performance and the reliability of the battery cell 7 during use are further improved, and the cycle performance of the battery cell 7 during use is also further improved.

For example, the content in percentage by weight of the chain carbonate in the electrolyte solution is 4 wt%, 4.5 wt%, 5 wt%, 8 wt%, 10 wt%, 12wt%, 15 wt%, 18 wt%, 20 wt%, 22 wt%, 25wt%, 30 wt%, 35 wt%, 40 wt%, 45 wt%, 50wt%, 55 wt%, 60 wt%, 65 wt%, 70 wt%, or in a range formed by any two of the above values.

In some embodiments, the chain carbonate includes a compound of Formula I, 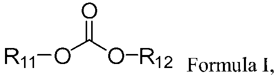 where in Formula I, R₁₁ and R₁₂ each independently include a C1 to C3 alkyl group or a C1 to C3 haloalkyl group. When the chain carbonate has the above material, the rate performance and the reliability of the cylindrical battery cell 7 during use is further improved, and the cycle performance of the cylindrical battery cell 7 is also further improved.

In some embodiments, R₁₁ and R₁₂ each independently include a C1 to C3 alkyl group or a C1 to C3 fluoroalkyl group.

For example, the chain carbonate includes one or more of compounds of Formula I-1 to Formula I-6:

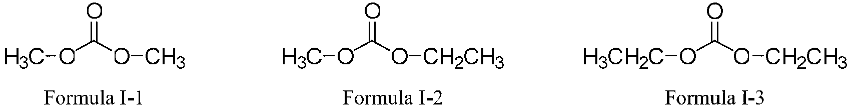

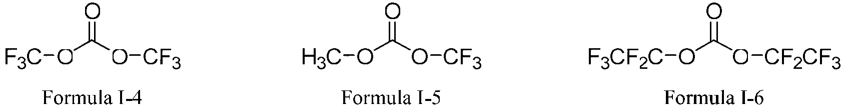

Optionally, the chain carbonate includes the compound of Formula I-1,

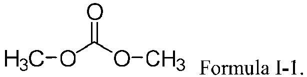

For example, the chain carbonate includes the compound of Formula I-1, and the content in percentage by weight of the compound of Formula I-1 in the electrolyte solution is 4 wt% to 42.5 wt%, and optionally 8.5 wt% to 35 wt%.

In some embodiments, the chain ester solvent further includes a chain carboxylate. By using the chain carboxylate and the chain carbonate in combination, the electrical conductivity of the electrolyte solution is improved, the dynamic of liquid-phase transmission of the electrolyte solution is improved, the rate performance and the reliability of the cylindrical battery cell 7 during use are further improved, and the cycle performance of the cylindrical battery cell 7 during use is also further improved. Certainly, the chain carboxylate may also be used alone as the solvent system.

In some embodiments, the content in percentage by weight of the chain carboxylate in the electrolyte solution is 4 wt% to 70 wt%, optionally, 8.5 wt% to 60 wt%, and optionally, 20 wt% to 55 wt%. With a content in percentage by weight of the chain carboxylate in the electrolyte solution in the above range, the electrical connectivity of the electrolyte solution is improved, the dynamic of liquid-phase transmission of the electrolyte solution is improved, and the rate performance and the reliability of the battery cell 7 during use are further improved.

For example, the content in percentage by weight of the chain carboxylate in the electrolyte solution is 4 wt%, 4.5 wt%, 5 wt%, 8 wt%, 8.5 wt%, 10 wt%, 12 wt%, 15 wt%, 18 wt%, 20 wt%, 22 wt%, 25 wt%, 30 wt%, 35 wt%, 40 wt%, 45 wt%, 50 wt%, 55 wt%, 60 wt%, 65 wt%, 70 wt%, or in a range formed by any two of the above values.

In some embodiments, the chain carboxylate includes a compound of Formula II: 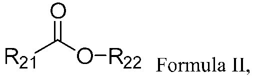 where in Formula II,
R₂₁ includes a hydrogen atom, a halogen atom, a C1 to C3 alkyl group, or a C1 to C3 haloalkyl group; and
R₂₂ includes a C1 to C3 alkyl group or a C1 to C3 haloalkyl group.

In some embodiments, R₂₁ includes a hydrogen atom, a fluorine atom, a C1 to C3 alkyl group, or a C1 to C3 fluoroalkyl group.

In some embodiments, R₂₂ include a C1 to C3 alkyl group or a C1 to C3 fluoroalkyl group.

For example, the chain carboxylate includes one or more of compounds of Formula II-1 to Formula II-6:

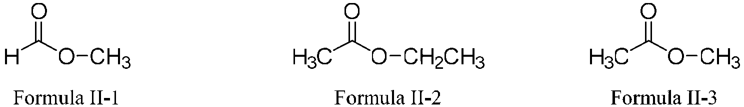

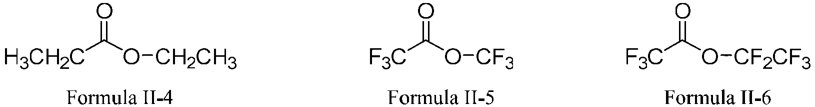

For example, optionally the chain carboxylate includes one or more of the compounds of Formula 11-1 to Formula 11-6:

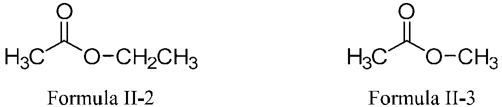

The chain carboxylate may include multiple optional solutions.

For example, the chain carboxylate includes the compound of Formula 11-2, and the content in percentage by weight of the compound of Formula II-2 in the electrolyte solution is 20 wt% to 55 wt%.

For example, the chain carboxylate includes the compound of Formula II-3, and the content in percentage by weight of the compound of Formula II-3 in the electrolyte solution is 20 wt% to 55 wt%.

For example, the chain carboxylate includes the compound of Formula 11-2 and the compound of Formula 11-3. The content in percentage by weight of the compound of Formula 11-2 and the compound of Formula II-3 in the electrolyte solution is 20 wt% to 55 wt%.

For example, the chain ester solvent in the electrolyte solution may include the compound of Formula 1-1 and the compound of Formula II-2. The content in percentage by weight of the chain ester solvent in the electrolyte solution is 25.5 wt% to 76.5 wt%, optionally, 25.5 wt% to 70 wt%, and optionally 42.5 wt% to 70 wt%. For example, the content in percentage by weight of the compound of Formula I-1 in the electrolyte solution is 8.5 wt% to 35 wt%, and the content in percentage by weight of the compound of Formula II-2 is 20 wt% to 55 wt%.

For example, the chain ester solvent in the electrolyte solution may include the compound of Formula I-1 and the compound of Formula II-3. The content in percentage by weight of the chain ester solvent in the electrolyte solution is 25.5 wt% to 76.5 wt%, optionally, 25.5 wt% to 70 wt%, and optionally 42.5 wt% to 70 wt%. For example, the content in percentage by weight of the compound of Formula I-1 in the electrolyte solution is 8.5 wt% to 35 wt%, and the content in percentage by weight of the compound of Formula 11-3 in the electrolyte solution is 20 wt% to 55 wt%.

For example, the chain ester solvent in the electrolyte solution may include the compound of Formula 1-1, the compound of Formula II-2 and the compound of Formula II-3. The content in percentage by weight of the chain ester solvent in the electrolyte solution is 25.5 wt% to 76.5 wt%, optionally, 25.5 wt% to 70 wt%, and optionally 42.5 wt% to 70 wt%. For example, the content in percentage by weight of the compound of Formula 1-1 in the electrolyte solution is 8.5 wt% to 35 wt%, the content in percentage by weight of the compound of Formula II-2 in the electrolyte solution is 8.5 wt% to 35 wt%, and the content in percentage by weight of the compound of Formula II-3 in the electrolyte solution is 8.5 wt% to 35 wt%.

The casing 20 has a cylindrical structure. The casing 20 includes a shell 21, the shell 21 has a cylindrical structure, and correspondingly the electrode assembly 10 has a shape that is also a cylindrical structure. The casing 20 is made of various materials. For example, the base material of the casing 20 includes, but is not limited to, copper, iron, aluminum, steel, and an aluminum alloy. Optionally, the base material of the casing 20 includes steel, for example, stainless steel. For example, the base material of the shell 21 includes steel, for example, stainless steel. The shape of the end cover 22 may be adapted to the shape of the shell 21 to fit the shell 21. The base material of the end cover 22 may be the same as or different from the base material of the shell 21. Optionally, the end cover 22 may be made of a material with a hardness and strength (for example, copper, iron, aluminum, steel, an aluminum alloy, and a plastic), so that the end cover 22 is less likely to deform upon extrusion and collision, enabling the cylindrical battery cell 7 to have a higher structural strength and enhanced reliability. Optionally, the base material of the end cover 22 includes steel, for example, stainless steel. In the embodiments of the present application, the base material is a material with the largest proportion.

In some embodiments, the casing 20 includes a shell 21 and an end cover 22. The shell 21 includes a side wall 212 and an end wall 211 connected to the side wall 212. The shell 21 has an opening, the end cover 22 is connected to the side wall 212 to cover the opening, and the end cover 22 and the end ball 211 are opposite to each other in the axial direction of the casing 20.

In some embodiments, the side wall 212 the end wall 211 are an integrally formed structure.

In some embodiments, the base material of the side wall 212 includes steel, and the side wall 212 has a thickness of 0.30 mm to 1.2 mm, and optionally 0.30 mm to 0.55 mm. When the thickness of the side wall 212 falls within the above range, the side wall 212 has a high strength and a high stress withstanding capability, and can effectively relieve the risk of deformation of the side wall 212 and reduce the risk of bulging of the cylindrical battery cell 7, thereby improving the reliability of the cylindrical battery cell 7 during use.

For example, the thickness of the side wall 212 may be 0.30 mm, 0.31 mm, 0.32 mm, 0.35 mm, 0.38 mm, 0.4 mm, 0.45 mm, 0.48 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.5 mm, or in a range formed by any two of the above values.

In some embodiments, the base material of the side wall 212 includes steel, and when the thickness of the side wall 212 is 0.30 mm to 1.2 mm, the content in percentage by weight of the chain ester solvent is 25.5 wt% to 76.5 wt%. When the content in percentage by weight of the chain ester solvent falls within the above range, the rate performance of the cylindrical battery cell 7 is improved. However, some gases are generated in the cylindrical battery cell 7, causing the risk of bulging of the cylindrical battery cell 7. In the embodiment of the present application, when the thickness of the casing 20 falls within the above range, the casing 20 has a relatively high strength and a high stress withstanding capability, and can effectively relieve the risk of deformation of the casing 20 and reduce the risk of bulging of the cylindrical battery cell 7, thereby improving the reliability of the cylindrical battery cell 7 during use, and improving the cycle performance of the cylindrical battery cell 7.

In some embodiments, the base material of the side wall 212 includes steel, the thickness of the side wall 212 is 0.30 mm to 0.55 mm, and the content in percentage by weight of the chain ester solvent is 25.5 wt% to 70 wt%. By using such a thickness of the casing 20 in combination with such a content in percentage by weight of the chain ester solvent, the rate performance and the reliability of the cylindrical battery cell 7 during use can both be improved, and the cycle performance of the cylindrical battery cell 7 can be improved.

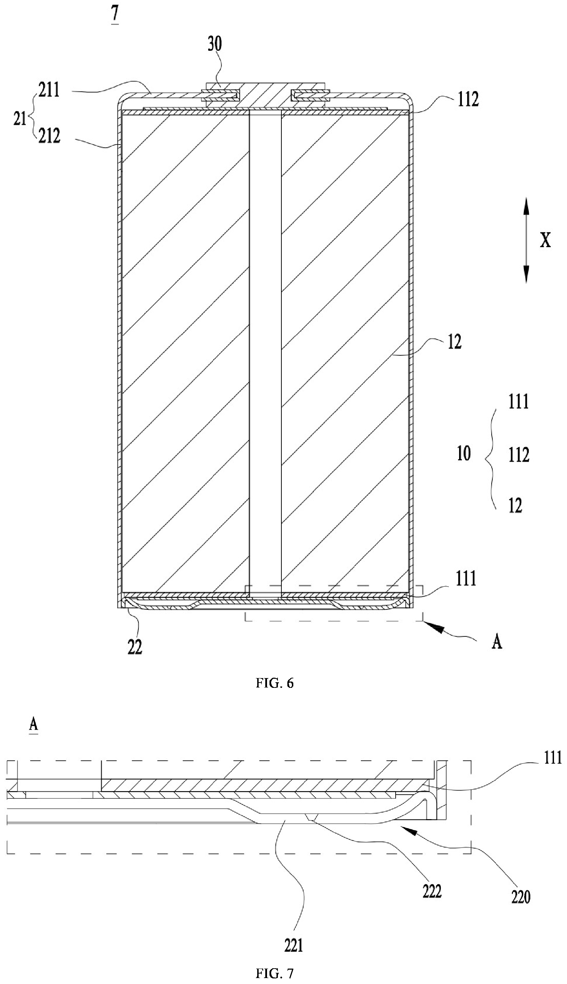

FIG. 6 is a cross-sectional view of a cylindrical battery cell 7 according to some embodiments of the present application; and FIG. 7 is a schematic enlarged view of portion A of the cylindrical battery cell 7 shown in FIG. 6.

As shown in FIGs. 6 and 7, in some embodiments, the casing 20 includes a shell 21 and an end cover 22. The shell 21 has an opening, and the end cover 22 is connected to the shell 21 and covers the opening. The end cover 22 has a pressure relief mechanism 220.

When short circuit or overcharging occurs, the electrolyte solution and the active material react to release a gas and heat. The pressure relief mechanism 220 is configured to deform when an internal pressure or temperature in the casing 20 reaches a threshold, so that an internal space of the casing 20 communicates with an external space, to relieve the pressure or temperature inside the casing 20. The deformation of the pressure relief mechanism 220 includes, but is not limited to, cracking, melting, and others. The threshold design varies according to different design requirements. The threshold may depend on the material of one or more of the positive electrode plate, the negative electrode plate, the electrolyte solution, and the isolation member of the cylindrical battery cell 7.

In the embodiment of the present application, the deformation of the pressure relief mechanism 220 may be triggered by an internal pressure in the casing 20, by an internal temperature in the casing 20, or by the internal pressure and the internal temperature in the casing 20 in combination.

For example, with the continuous accumulation of the gas inside the casing 20, the internal pressure in the casing 20 may reach or is even higher than a pressure threshold. When the internal pressure in the casing 20 reaches the pressure threshold, the pressure relief mechanism 220 is deformed under the action of the internal pressure, so that the internal space in the casing 20 communicates with the external space, and the gas inside the casing 20 is vented, to reduce the risk of explosion of the cylindrical battery cell 7.

For example, when the electrolyte solution and the active material react and rapidly release heat, the internal temperature in the casing 20 is caused to increase, and an increase in the temperature will also cause the increase of the internal pressure in the casing 20. When the internal temperature in the casing 20 reaches a threshold, the pressure relief mechanism 220 is deformed under the action of the temperature and pressure, so that the internal space in the casing 20 communicates with the external space, and the gas inside the casing 20 is vented, to reduce the risk of explosion of the cylindrical battery cell 7.

When the internal pressure or temperature in the casing 20 reaches a threshold, the internal space in the casing 20 is brought into communication with the external space by the deformation of the pressure relief mechanism 220 in the embodiment of the present application, thereby relieving the internal gas and internal pressure in the casing 20, and reducing the risk of explosion of the cylindrical battery cell 7.

In some embodiments, the end cover 22 is provided with a recess 221, and a bottom wall of the recess 221 is a weak portion 222. The weak portion 222 is configured to crack to relieve the internal pressure when the internal pressure of the cylindrical battery cell 7 reaches a threshold.

After the weak portion 222 is cracked, a channel for internal pressure relief is formed. After the weak portion 222 is cracked, the internal gas in the cylindrical battery cell 7 is vented from the cracked portion. In this way, the pressure in the cylindrical battery cell 7 can be relieved under controllable pressure, so as to prevent potential more serious accidents.

In some embodiments, the base material of the weak portion 222 includes steel, and the thickness of the weak portion 222 is 0.01 mm to 0.3 mm, and optionally, 0.05 mm to 0.2 mm. When the thickness of the weak portion 222 falls within the above range, the weak portion 222 has a relatively high strength and a high stress withstanding capability, so that the pressure endurance capability of the cylindrical battery cell 7 can be effectively improved, and the reliability of the cylindrical battery cell 7 during use can be improved.

For example, the thickness of the weak portion 222 may be 0.01 mm, 0.02 mm, 0.03 mm, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, or in a range formed by any two of the above values.

In some embodiments, the base material of the weak portion 222 includes steel, and when the thickness of the weak portion 222 is 0.01 mm to 0.3 mm, the content in percentage by weight the chain ester solvent is 25.5 wt% to 76.5 wt%. When the content in percentage by weight of the chain ester solvent falls within the above range, the rate performance of the cylindrical battery cell 7 can be improved. However, some gases are generated in the cylindrical battery cell 7, causing the risk of bulging of the cylindrical battery cell 7. However, in the embodiment of the present application, when the thickness of the weak portion 222 falls within the above range, the weak portion 222 has a relatively high strength and a high stress withstanding capability, so that the pressure endurance capability of the cylindrical battery cell 7 can be effectively improved, and the reliability of the cylindrical battery cell 7 during use can be improved.

In some embodiments, the base material of the weak portion 222 includes steel, and when the thickness of the weak portion 222 is 0.05 mm to 0.2 mm, the content in percentage by weight of the chain ester solvent is 25.5 wt% to 70 wt%. By using such a thickness of the casing 20 in combination with such a content in percentage by weight of the chain ester solvent, the rate performance and the reliability of the cylindrical battery cell 7 during use can both be improved.

In some embodiments, the organic solvent may further include, but is not limited to, at least one of a cyclic carbonate, butylene carbonate (BC), fluoroethylene carbonate (FEC), 1, 4-butyrolactone (GBL), sulfolane (SF), dimethyl sulfone (MSM), methylethyl sulfone (EMS), and diethyl sulfone (ESE). Optionally, the organic solvent further includes a cyclic carbonate. For example, the cyclic carbonate includes at least one of ethylene carbonate, propylene carbonate and fluoroethylene carbonate.

The qualification and quantification of each substance or element in the electrolyte solution of the present application can be detected using appropriate equipment and methods known to those skilled in the art. The relevant detection methods can refer to domestic and foreign detection standards, and domestic and foreign enterprise standards, etc. Those skilled in the art can also adapt certain detection steps/instrument parameters, etc., in view of the detection accuracy, to obtain more accurate detection results. A single detection method can be used for qualification or quantification, or a combination of several detection methods can be used for qualification or quantification.

In the embodiment of the present application, the types and contents of inorganic components/lithium salt in the electrolyte solution have the meanings well known in the art and can be detected using equipment and methods known in the art. For example, the inorganic components/lithium salt concentrations in the electrolyte solution can be qualitatively or quantitatively analyzed by ion chromatography according to the standard JY/T020-1996 "General Rules for Ion Chromatography Methods". In the embodiment of the present application, a newly prepared electrolyte solution can be taken as a sample, or a battery that has been fully discharged (discharged to the lower cut-off voltage such that the state of charge of the battery is approximately 0% SOC) can be reversely disassembled, and the free electrolyte solution obtained from the battery is used as a sample. Then they are detected by ion chromatography.

In the embodiment of the present application, the types and contents of organic components in the electrolyte solution have meanings well known in the art and can be detected using equipment and methods known in the art. For example, the organic components in the electrolyte solution can be qualitatively and quantitative analyzed by gas chromatography according to GB/T9722-2006 "Chemical Reagents - General Rules for Gas Chromatography". In the embodiment of the present application, a newly prepared electrolyte solution can be taken as a sample, or a battery that has been fully discharged (discharged to the lower cut-off voltage such that the state of charge of the battery is approximately 0% SOC) can be reversely disassembled, and the free electrolyte solution obtained from the battery is used as a sample. Then they are detected by ion chromatography.

In the embodiment of present application, the thickness of the weak portion 222 has a meaning well-known in the art and can be detected using a method and an instrument well known in the art. For example, the thickness is detected by using a micrometer.

In the embodiment of the present application, the thickness of the film layer has a meaning well known in the art, and can be detected by using a device and a method well known in the art. For example, the casing 20 is cut, and the thicknesses of the film layer at different positions are tested by using an X-ray thickness meter, and averaged. The average is used as the thickness of the film layer.

In the embodiment of the present application, the types and contents of elements in the film layer have meanings well known in the art, and can be detected by using devices and methods well known in the art. For example, the types and contents of elements on the surface of the film layer are detected by using a spectrometer and a scanning electron microscope. The types and contents of elements on the surface of the film layer are basically the same as the types and contents of elements in the film layer, and the types and contents of elements in the film layer are characterized by detecting the types and contents of elements on the surface of the film layer.

### Examples

The disclosure of the embodiments of the present application is more specifically described in connection with the following examples. These examples are merely used for descriptive purposes, since various modifications and changes within the scope of the disclosure of the embodiments of the present application are obvious to those skilled in the art. Unless otherwise stated, all parts, percentages, and ratios reported in the following examples are based on weight, all reagents used in the examples are commercially available or synthesized according to conventional methods and can be directly used without further treatment, and all instruments used in the examples are commercially available.

### Example 1

### 1. Preparation of positive electrode plate

The positive electrode plate included a positive electrode current collector and a positive electrode film layer. The positive electrode film layer was located at two sides of the positive electrode current collector, and the positive electrode current collector was an aluminum foil. The positive electrode film layer was a film layer formed by uniformly coating a positive electrode slurry (the solvent was N-methylpyrrolidone NMP) onto the surface of the aluminum foil as the positive electrode current collector, followed by drying, and cold pressing. The positive electrode film layer included a positive electrode active material, acetylene black as a conductive agent, and polyvinylidene fluoride (PVDF) as a binder at a weight ratio of 96.5:2:1.5.

The positive electrode active material included a compound of Formula LiNi_{0.9}Co_{0.05}Mn_{0.05}O₂ (Ni90).

### 2. Preparation of negative electrode plate

The negative electrode plate included a negative electrode current collector and a negative electrode film layer. The negative electrode film layer was located at two sides of the negative electrode current collector, and the negative electrode current collector was a copper foil. The negative electrode film layer was a film layer formed by uniformly coating a negative electrode slurry (the solvent was deionized water) onto the surface of the copper foil as the negative electrode current collector, followed by drying, and cold pressing. The negative electrode film layer included a negative electrode active material, styrene-butadiene rubber (SBR) as a binder, sodium carboxymethyl cellulose (CMC-Na) as a thickener, and acetylene black as a conductive agent at a weight ratio of 96.2:1.8:1.2:0.8.

The negative electrode active material included artificial graphite and a silicon-based material (specifically, a silicon-carbon compound), and the content of the silicon element in the negative electrode film layer was 5%.

### 3. Separator

The separator was a polypropylene (PE) film.

### 4. Preparation of electrolyte solution

The electrolyte solution included an organic solvent and a lithium salt. The organic solvent included a chain ester solvent and a cyclic ester solvent (ethylene carbonate). The chain ester solvent included a chain carbonate (dimethyl carbonate DMC) and a chain carboxylate (methyl acetate and ethyl acetate at a weight ratio of 1:1). The weight ratio of the chain carbonate, the chain carboxylate, and the ethylene carbonate was 3: 4: 3. The lithium salt included lithium hexafluorophosphate LiPF₆ and lithium bis(fluorosulfonyl)imide LiFSI. Dimethyl carbonate DMC, methyl acetate, ethyl acetate and ethylene carbonate were mixed according to the above weight ratio, and then fully dried lithium salt was dissolved in the mixed organic solvent to prepare an electrolyte solution. The molar concentration of lithium hexafluorophosphate LiPF₆ was 0.6 mol/L, and the molar concentration of lithium bis(fluorosulfonyl)imide LiFSI was 0.4 mol/L.

### 5. Preparation of cylindrical battery cell

The positive electrode plate, the separator and the negative electrode plate were stacked in sequence, so that the separator was positioned between the positive electrode plate and the negative electrode plate for separation. The positive electrode plate, the separator and the negative electrode plate were wound to obtain an electrode assembly. The electrode assembly was placed in a cylindrical casing, and dried. The electrolyte solution was injected. After vacuum packaging, standing, formation, shaping and other procedures, a cylindrical battery cell was obtained. The casing included a shell and an end cover. The shell included integrally formed side wall and end wall. The side wall was arranged around the electrode assembly. The end cover and the end wall were opposite to each other in the axial direction of the casing. The side wall included a casing body and a film layer. The film layer was located on two surfaces of the casing body. The casing body included stainless steel, and the thickness of the film layer was 3 µm. The film layer included 90 wt% of nickel element, 2 wt% of iron element and 5 wt% of carbon element.

### Comparative Example 1

A cylindrical battery cell was prepared by using a method similar to that in Example 1. A difference from Example 1 lied in that the lithium salt included 0.9 mol/L lithium hexafluorophosphate LiPF₆; and the side wall did not include the film layer.

### Example 2-1 to Example 2-11

A cylindrical battery cell was prepared by using a method similar to that in Example 1. A difference from Example 1 lied in that the composition of the lithium salts was adjusted.

### Example 3-1 to Example 3-2

A cylindrical battery cell was prepared by using a method similar to that in Example 1. A difference from Example 1 lied in that the type of the sulfonimide salt in the lithium salts was adjusted.

### Performance test

### 1. Cycle performance test of battery cell

At 45°C, the cylindrical battery cells prepared in various examples and comparative examples were constant-current charged at a rate of 0.5 C to a charge cut-off voltage of 4.25 V, constant-voltage charged to a current of 0.05 C or less, stood for 5 min, then constant-current discharged at a rate of 0.33 C to a discharge cut-off voltage of 2.5 V and stood for 5 min. This was a charge-discharge cycle. According to the above-mentioned cyclic charge and discharge test of the battery cell, the capacity retention rate of the battery cell after 800 cycles was calculated.

### 2. Gas production test of cells during storage

At 25°C, the cylindrical battery cells prepared in various examples and comparative examples were constant-current charged to 4.25V at a rate of 0.5 C, and then constant-voltage charged to a current of *≤* 0.05 C. Then, the battery was stored at 60°C for 100 days, and the internal pressure (Mpa) in the battery was detected by an external pressure gauge.

### 3. Internal resistance test of battery cell

At 25°C, the cylindrical battery cells prepared in various examples and comparative examples were constant-current charged at a rate of 1C to 4.25 V, then constant-voltage charged to a current of 0.05 C or less, and then discharged at 1C for 30 min, to adjust the capacity of the battery cell to 50% SOC.

The positive and negative probes of TH2523A AC internal resistance tester were respectively contacted with the positive and negative electrodes of the battery cell, and the internal resistance (mΩ) of the battery cell was read on the internal resistance tester.

### Test results

### The test results are shown in Table 1.

**Table 1**

| Items | Electrolyte solution | | | | | Battery performance | | |
|---|---|---|---|---|---|---|---|---|
| | | | | | | Capacity retention rate /% | Internal pressure /Mpa | Internal resistance/ mQ |
| | Molar concentration M₁ of lithium hexafluorophosphate/( mol/L) | Sulfonimide salt | | M₁+M₂/( mol/L) | M₂/M₁ | | | |
| | | Material | Molar concentration M₂/(mol/L) | | | | | |
| Comparative Example 1 | 0.9 | / | / | 0.9 | / | 71.2 | 0.288 | 18.3 |
| Example 1 | 0.6 | Formula A-1 | 0.4 | 1.0 | 0.67 | 80.0 | 0.250 | *5.0* |
| Example 2-1 | 0.2 | Formula A-1 | 0.4 | 0.6 | 2.00 | 82.4 | 0.242 | 8.9 |
| Example 2-2 | 0.3 | Formula A-1 | 0.4 | 0.7 | 1.33 | 80.5 | 0.245 | 5.8 |
| Example 2-3 | 0.7 | Formula A-1 | 0.4 | 1.1 | 0.57 | 77.6 | 0.252 | 5.1 |
| Example 2-4 | 0.8 | Formula A-1 | 0.4 | 1.2 | 0.50 | 75.3 | 0.261 | 4.5 |
| Example 2-5 | 0.6 | Formula A-1 | 0.2 | 0.8 | 0.33 | 75.4 | 0.258 | 8.9 |
| Example 2-6 | 0.6 | Formula A-1 | 0.3 | 0.9 | 0.50 | 78.6 | 0.251 | 5.8 |
| Example 2-7 | 0.6 | Formula A-1 | 0.6 | 1.2 | 1.00 | 79.8 | 0.246 | 5.1 |
| Example 2-8 | 0.6 | Formula A-1 | 0.9 | 1.5 | 1.50 | 82.5 | 0.244 | 4.5 |
| Example 2-9 | 0.9 | Formula A-1 | 0.2 | 1.1 | 0.22 | 74.5 | 0.259 | 6.5 |
| Example 2-10 | 0.9 | / | / | 0.9 | / | 73.0 | 0.265 | 13.0 |
| Example 2-11 | 1.2 | / | / | 1.2 | / | 74.0 | 0.286 | 10.0 |
| Example 3-1 | 0.6 | Formula A-2 | 0.4 | 1.0 | 0.67 | 78.6 | 0.254 | 6.8 |
| Example 3-2 | 0.6 | Formula A-3 | 0.4 | 1.0 | 0.67 | 77.5 | 0.258 | 7.3 |

In Table 1:
Formula A-1 represents a bis(fluorosulfonyl)imide ion, and a corresponding cation is a lithium ion;
Formula A-2 represents a bis(trifluoromethansulfonyl)imide ion, and a corresponding cation is a lithium ion; and
Formula A-3 represents a (fluorosulfonyl) (trifluoromethansulfonyl)imide ion, and a corresponding cation is a lithium ion.

As can be seen from Table 1,

The casing in Comparative Example 1 is a stainless steel casing, which is susceptible to corrosion by lithium hexafluorophosphate. Compared with Comparative Example 1, in the examples of the present application, the film layer including Ni is disposed on the surface of the casing, so that the corrosion resistance of the casing is effectively improved, and the risk of corrosion of the casing by hydrofluoric acid generated by decomposition of lithium hexafluorophosphate is reduced. This improves the cycle performance of the cylindrical battery cell, reduces the internal pressure in the cylindrical battery cell, reduced the gas generation, and improves the reliability of the cylindrical battery cell during use.

In Example 2-1 to Example 2-11, by adjusting the composition of the lithium salts, the cycle performance of the cylindrical battery cell is further improved, the internal pressure in the cylindrical battery cell is reduced, the gas generation is reduced, and the reliability of the cylindrical battery cell during use is improved. The transmission of ions through the liquid phase in the electrolyte solution system is also improved, the resistance is reduced, and the rate performance is improved. In Example 3-1 and Example 3-2, by adjusting the composition of the sulfonimide salts, the cycle performance of the cylindrical battery cell is further improved, the internal pressure in the cylindrical battery cell is reduced, the gas generation is reduced, and the reliability of the cylindrical battery cell during use is improved. The transmission of ions through the liquid phase in the electrolyte solution system is also improved, the resistance is reduced, and the rate performance is improved.

### Example 4

A cylindrical battery cell was prepared by using a method similar to that in Example 1. A difference from Example 1 lied in that the thickness of the film layer on the side wall of the casing was adjusted.

### Example 5

A cylindrical battery cell was prepared by using a method similar to that in Example 1. A difference from Example 1 lied in that the composition of the film layer on the side wall of the casing was adjusted.

The test results are shown in Table 2.

**Table 2**

| Items | Film layer on side wall of the casing | | | | Battery performance | | |
|---|---|---|---|---|---|---|---|
| | Content in percentage by weight of Ni/wt% | Content in percentage by weight of Fe/wt% | Content in percentage by weight of C/wt% | Thickness/ µm | Capacity retention rate% | Internal pressure /Mpa | Internal resistance/m Q |
| Example 4 | 90 | 2 | 5 | 2.0 | 80.4 | 0.253 | 5.5 |
| Example 5 | 80 | 8 | 12 | 3.0 | 80.3 | 0.252 | 5.4 |

It can be known from Table 2 that the electrolyte solution system in the examples of the present application is applicable to metal casings having different film thicknesses, for example, from 1.5 µm to 6.0 µm, and optionally, from 2.0 µm to 4.0 µm. When the thickness of the film layer falls within the above range, the battery has excellent cycle performance and reliability during use.

The electrolyte solution system in the examples of the present application is applicable to metal casings with a film layer having different nickel content, for example, 70 wt% to 100 wt% and optionally 80 wt% to 95 wt%. When the content in percentage by weight of the nickel element falls within the above range, the battery has excellent cycle performance and reliability during use.

### Example 6-1 to Example 6-2

A cylindrical battery cell was prepared by using a method similar to that in Example 1. A difference from Example 1 lied in that the content in percentage by weight of the silicon element in the negative electrode film layer was adjusted.

The test results are shown in Table 3.

**Table 3**

| Items | Negative electrode film layer | Battery performance | | |
|---|---|---|---|---|
| | Content in percentage by weight of silicon/wt% | Capacity retention rate % | Internal pressure/Mpa | Internal resistance/mΩ |
| Example 6-1 | 3 | 85.0 | 0.245 | 4 |
| Example 6-2 | 20 | 75.0 | 0.270 | 10 |

It can be seen from Table 3 that in Example 6-1 to Example 6-2, by adjusting the content in percentage by weight of the silicon element in the negative electrode film layer, the cycle performance of the cylindrical battery cell is further improved, the internal pressure in the cylindrical battery cell is reduced, the gas generation is reduced, and the reliability of the cylindrical battery cell during use is improved.

Although illustrative embodiments have been shown and described, those skilled in the art should understand that the above embodiments should not be construed as limitations on the present application, and that changes, substitutions and modifications may be made to the embodiments without departing from the spirit, principles and scope of the present application.

## Claims

1. A cylindrical battery cell, comprising an electrolyte solution, an electrode assembly, and a casing, the casing accommodating the electrolyte solution and the electrode assembly, wherein
the electrolyte solution comprises an electrolyte salt and the electrolyte salt comprises a hexafluorophosphate; and
the casing comprises a casing body and a film layer, the film layer is at least disposed on a surface of the casing body that faces the electrode assembly, and a matrix element in the film layer is the nickel element.

2. The cylindrical battery cell according to claim 1, wherein the molar concentration of the hexafluorophosphate is less than or equal to 1.2 mol/L.

3. The cylindrical battery cell according to claim 2, wherein the molar concentration of the hexafluorophosphate is less than or equal to 0.9 mol/L.

4. The cylindrical battery cell according to claim 3, wherein the molar concentration of the hexafluorophosphate is 0.2 mol/L to 0.8 mol/L.

5. The cylindrical battery cell according to claim 4, wherein the molar concentration of the hexafluorophosphate is 0.3 mol/L to 0.7 mol/L.

6. The cylindrical battery cell according to any one of claims 1 to 5, wherein a thickness of the film layer is 1.5 µm to 6.0 µm.

7. The cylindrical battery cell according to claim 6, wherein the thickness of the film layer is 2.0 µm to 4.0 µm.

8. The cylindrical battery cell according to any one of claims 1 to 7, wherein the content in percentage by weight of the nickel element in the film layer is 70 wt% to 100 wt%.

9. The cylindrical battery cell according to claim 8, wherein the content in percentage by weight of the nickel element in the film layer is 80 wt% to 95 wt%.

10. The cylindrical battery cell according to any one of claims 1 to 9, wherein the film layer further comprises the iron element, and the content in percentage by weight of the iron element in the film layer is 0.1 wt% to 10 wt%; and/or
the film layer further comprises the carbon element, and the content in percentage by weight of the carbon element in the film layer is 0.1 wt% to 15 wt%.

11. The cylindrical battery cell according to claim 10, wherein the content in percentage by weight of the iron element in the film layer is 1 wt% to 5 wt%.

12. The cylindrical battery cell according to claim 10 or 11, wherein the content in percentage by weight of the carbon element in the film layer is 4 wt% to 12 wt%.

13. The cylindrical battery cell according to any one of claims 1 to 12, wherein the electrolyte salt comprises a sulfonimide salt, and the ratio of the molar concentration of the sulfonimide salt to the molar concentration of the hexafluorophosphate is 0.06 to 6.

14. The cylindrical battery cell according to claim 13, wherein the ratio of the molar concentration of the sulfonimide salt to the molar concentration of the hexafluorophosphate is 0.2 to 2.

15. The cylindrical battery cell according to claim 14, wherein the ratio of the molar concentration of the sulfonimide salt to the molar concentration of the hexafluorophosphate is 0.3 to 1.5.

16. The cylindrical battery cell according to any one of claims 13 to 15, wherein the molar concentration of the electrolyte salt is 0.5 mol/L to 2 mol/L.

17. The cylindrical battery cell according to claim 16, wherein the molar concentration of the electrolyte salt is 0.6 mol/L to 1.5 mol/L.

18. The cylindrical battery cell according to any one of claims 13 to 17, wherein the sulfonimide salt comprises an anion of Formula A: 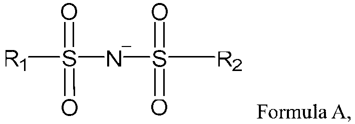 wherein in Formula A, R₁ and R₂ each independently comprise a halogen atom or a C1 to C6 haloalkyl group.

19. The cylindrical battery cell according to claim 18, wherein the halogen atom comprises a fluorine atom; and/or
the C1 to C6 haloalky group comprises a C1 to C6 fluoroalkyl group.

20. The cylindrical battery cell according to claim 18 or 19, wherein R₁ and R₂ each independently comprise a fluorine atom or a C1 to C3 fluoroalkyl group.

21. The cylindrical battery cell according to any one of claims 18 to 20, wherein the anion of Formula A comprises one or more of anions of Formula A-1 to Formula A-5:

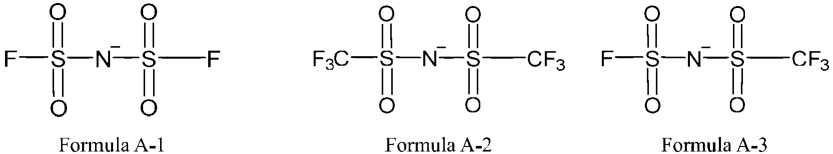

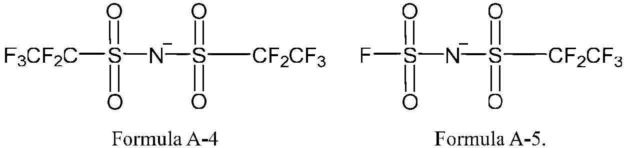

22. The cylindrical battery cell according to claim 21, wherein the anion of Formula A comprises one or more of the anions of Formula A-1 to Formula A-2:

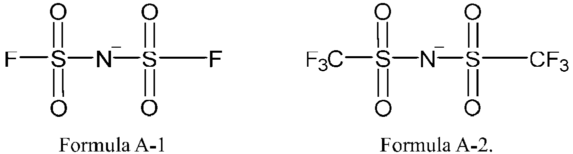

23. The cylindrical battery cell according to any one of claims 1 to 22, wherein a base material of the casing body is steel.

24. The cylindrical battery cell according to any one of claims 1 to 23, wherein the electrode assembly comprises a negative electrode plate, the negative electrode plate comprises a negative electrode current collector and a negative electrode film layer arranged on at least one side of the negative electrode current collector and comprising a negative electrode active material, and the negative electrode active material comprises the silicon element.

25. The cylindrical battery cell according to claim 24, wherein the content in percentage by weight of the silicon element in the negative electrode film layer is 1% to 32%.

26. The cylindrical battery cell according to any one of claims 1 to 25, wherein the electrolyte solution comprises a chain ester solvent, and the content in percentage by weight of the chain ester solvent in the electrolyte solution is greater than or equal to 25.5 wt%.

27. The cylindrical battery cell according to claim 26, wherein the content in percentage by weight of the chain ester solvent in the electrolyte solution is 25.5 wt% to 76.5 wt%.

28. The cylindrical battery cell according to claim 26 or 27, wherein the chain ester solvent comprises a chain carbonate, and the content in percentage by weight of the chain carbonate in the electrolyte solution is 4 wt% to 70 wt%.

29. The cylindrical battery cell according to claim 28, wherein the chain carbonate comprises a compound of Formula I: 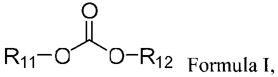 wherein in Formula 1, R₁₁ and R₁₂ each independently comprise a C1 to C3 alkyl group or a C1 to C3 haloalkyl group.

30. The cylindrical battery cell according to claim 29, wherein R₁₁ and R₁₂ each independently comprise a C1 to C3 alkyl group or a C1 to C3 fluoroalkyl group.

31. The cylindrical battery cell according to claim 29 or 30, wherein the chain carbonate comprises one or more of compounds of Formula I-1 to Formula I-6:

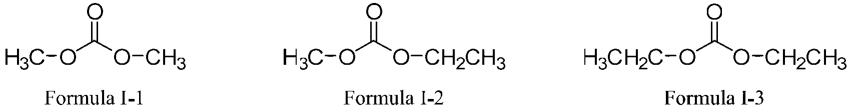

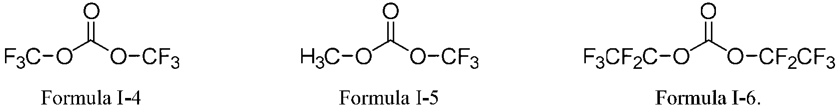

32. The cylindrical battery cell according to claim 31, wherein the chain carbonate comprises the compound of Formula I-1:

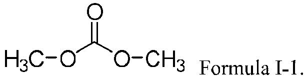

33. The cylindrical battery cell according to any one of claims 26 to 32, wherein the chain ester solvent further comprises a chain carboxylate, and the content in percentage by weight of the chain carboxylate in the electrolyte solution 4 wt% to 70 wt%.

34. The cylindrical battery cell according to claim 33, wherein the content in percentage by weight of the chain a carboxylate in the electrolyte solution is 8.5 wt% to 60 wt%.

35. The cylindrical battery cell according to claim 33 or 34, wherein the chain carboxylate comprises a compound of Formula II: 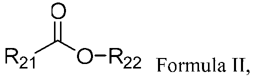 wherein in Formula II,
R₂₁ comprises a hydrogen atom, a halogen atom, a C1 to C3 alkyl group, or a C1 to C3 haloalkyl group; and
R₂₂ comprises a C1 to C3 alkyl group or a C1 to C3 haloalkyl group.

36. The cylindrical battery cell according to claim 35, wherein
R₂₁ comprises a hydrogen atom, a fluorine atom, a C1 to C3 alkyl group, or a C1 to C3 fluoroalkyl group; and/or
R₂₂ comprises a C1 to C3 alkyl group or a C1 to C3 fluoroalkyl group.

37. The cylindrical battery cell according to claim 35 or 36, wherein the chain carboxylate comprises one or more of compounds of Formula II-1 to Formula II-6:

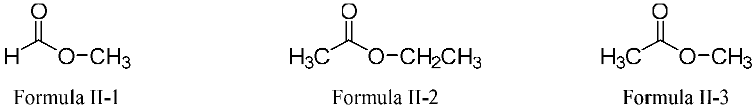

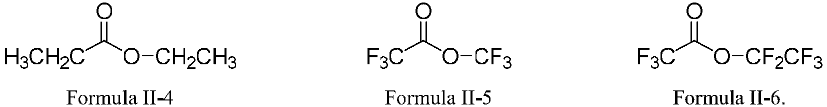

38. The cylindrical battery cell according to claim 37, wherein the chain carboxylate comprises one or more of the compounds of Formula II-2 and Formula II-3.

39. The cylindrical battery cell according to claim 38, wherein the chain carbonate comprises the compound of Formula I-1: 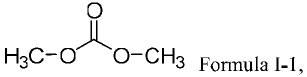
the content in percentage by weight of the compound of Formula I-1 in the electrolyte solution is 8.5 wt% to 35 wt%; and
the chain carboxylate comprises the compound of Formula II-2 and the compound of Formula II-3, and the content in percentage by weight of the compound of Formula II-2 and the compound of Formula II-3 in the electrolyte solution is 20 wt% to 55 wt%.

40. The cylindrical battery cell according to any one of claims 1 to 39, wherein the casing comprises a shell and an end cover, the shell comprises a side wall and an end wall connected to the side wall, the shell has an opening, the end cover is connected to the side wall to cover the opening, and the end cover and the end ball are opposite to each other in an axial direction of the cylindrical battery cell.

41. The cylindrical battery cell according to claim 40, wherein a base material of the side wall is steel, and a thickness of the side wall is 0.30 mm to 1.2 mm.

42. The cylindrical battery cell according to claim 40 or 41, wherein the side wall and the end wall are an integrally formed structure.

43. The cylindrical battery cell according to any one of claims 40 to 42, wherein the end cover is arranged with a pressure relief mechanism.

44. The cylindrical battery cell according to claim 43, wherein the pressure relief mechanism comprises a weak portion, a base material of the weak portion comprises steel, and a thickness of the weak portion is 0.01 mm to 0.3 mm.

45. The cylindrical battery cell according to claim 44, wherein the end cover is provided with a recess, and a bottom wall of the recess is the weak portion.

46. The cylindrical battery cell according to any one of claims 40 to 45, the cylindrical battery cell further comprising an electrode terminal arranged on the end wall; and
the cylindrical battery cell comprising the electrode assembly accommodated in the shell, the electrode assembly comprising a first tab and a second tab having opposite polarities, the first tab being electrically connected to the end wall, and the second tab being electrically connected to the electrode terminal.

47. The cylindrical battery cell according to any one of claims 1 to 46, wherein a size of the casing in the axial direction of the cylindrical battery cell is 1.3 times to 2.5 times a size of the casing in a radial direction of the cylindrical battery cell.

48. The cylindrical battery cell according to any one of claims 1 to 47, wherein the size of the casing in the axial direction of the cylindrical battery cell is 50 mm to 150 mm; and/or
the size of the casing in the radial direction of the cylindrical battery cell is 40 mm to 80 mm.

49. A battery, comprising the cylindrical battery cell according to any one of claims 1 to 48.

50. An electric device, comprising the battery according to claim 49.
